# EUROPEAN PATENT APPLICATION

(11) **EP 4 246 963 A1**
(43) Date of publication of application: **20.09.2023**
(21) Application number: 23159540.6
(22) Date of filing: 02.03.2023
(51) Int. Cl.: H04N 7/15, H04L 12/18, G06T 19/00, G06F 3/01, G06Q 20/12, H04N 7/14, H04M 3/56

(54) **PROVIDING SHARED AUGMENTED REALITY ENVIRONMENTS WITHIN VIDEO CALLS**

(30) Priority: 15.03.2022 US 202263269400 P; 09.08.2022 US 202217818596
(71) Applicant: Meta Platforms, Inc., Menlo Park, CA 94025 (US)
(72) Inventor: BARBOSA DA SILVA, Marcus Vinicius, Menlo Park, 94025 (US); COHEN, David Marc, Menlo Park, 94025 (US); DZIEZA, Emmett, Menlo Park, 94025 (US); DEL RIO LAZO, Dalia Antoinette, Menlo Park, 94025 (US)
(74) Representative: Murgitroyd & Company

(57) **Abstract**

Systems, methods, client devices, and non-transitory computer-readable media are disclosed for enabling video calls which facilitate shared augmented reality (AR) background environments. In particular, the disclosed systems can establish a video call between client devices. In addition, the disclosed systems can enable client devices to segment one or more participants captured via videos on the client devices from captured backgrounds. Moreover, the disclosed systems can enable the client devices to render, in place of the segmented backgrounds, AR background environments to place captured videos of the one or more participants within a shared AR background space to create the perception that the participants of the video call are present in the same location (or setting). Furthermore, the disclosed systems can enable the client devices to render the AR environments as shared 360 AR environments that render synchronized 360 AR spaces and/or AR effects across the client devices participating in the video call (e.g., utilizing an AR data channel).

## Description

### BACKGROUND

The present disclosure generally relates to video call systems. Video call systems allow users to electronically communicate via computing devices (e.g., smart phones, laptops, tablets, desktop computers) through the use of audio and video inputs (e.g., a built-in digital camera, digital web camera). Indeed, recent years have seen an increase in electronic communications through video calls and video conferences that enable multiple users to communicate via computing devices to share both video and audio of the users to one another. However, conventional video call systems are often limited to non-interactive video calls that simply and rigidly enable user devices to present and view captured videos between the user devices.

### SUMMARY

Embodiments of the present disclosure provide benefits and/or solve one or more of the foregoing or other problems in the art with systems, non-transitory computer-readable media, and methods that enable video calls which facilitate shared 360 augmented reality (AR) background environments. In particular, in one or more embodiments, the disclosed systems can establish a video call between client devices. In addition, the disclosed systems can enable client devices to segment one or more participants captured via videos on the client devices from captured backgrounds. Moreover, the disclosed systems can enable the client devices to render, in place of the segmented backgrounds, AR background environments (e.g., spheric 360-degree AR background environments) to place captured videos of the one or more participants within a shared background environment (or space) to create the perception that the participants of the video call are present in the same location (or setting). Furthermore, the disclosed systems can enable the client devices to render the AR environments as shared AR environments that render synchronized AR spaces and/or AR effects across the client devices participating in the video call (e.g., utilizing an AR data channel).

Additionally, the disclosed systems can enable a client device to track movement of a participant and/or movement of the client device and update a rendering of an AR background environment based on the tracked movement. For instance, the disclosed systems can enable the client device to render the multi-viewpoint AR background environment to display different viewpoints (or portions) of an AR background environment when movement of the client device and/or participant is detected by the client device to simulate an AR background environment that is viewable from 360-degree viewing angles.

Furthermore, the disclosed systems can utilize a dedicated augmented reality data channel to enable shared augmented reality video calls, which facilitate the sharing of, and interaction with, augmented reality elements during video calls. For example, the disclosed systems can establish a video call between client devices that include a video (and audio) data channel and an AR data channel. Moreover, in one or more embodiments, the disclosed systems enable one of the client devices to transmit AR data (e.g., AR element identifiers, AR element information, logic data objects, object vectors, participant identifiers) through the AR data channel to cause the other client device to render an AR element on a video captured by the other client device. For example, the disclosed systems can also enable a shared AR background environment between multiple client devices participating in the video call using the AR data channel.

In accordance with a first aspect of the present disclosure, there is provided a computer-implemented method comprising: conducting, by a client device, a video call with a participant device by receiving video data through a video data channel established for the video call from the participant device; rendering, within a digital video call interface, a first video captured by the client device within a first portion of a three-dimensional (3D) shared augmented reality (AR) space; and displaying, within the digital video call interface, a second video from the participant device by rendering video data received through the video data channel, the second video portraying a second portion of the 3D shared AR space.

In some embodiments, the method further comprises: receiving AR data corresponding to the 3D shared AR space through an AR data channel from the participant device to render the first video within the first portion of the 3D shared AR space.

In some embodiments, rendering the first video within the first portion of the 3D shared AR space comprises: generating an AR background texture for the 3D shared AR space; and replacing a background of the first video with a portion of the AR background texture corresponding to the first portion of the 3D shared AR space.

In some embodiments, the method further comprises: segmenting a user depicted within the first video from a background of the first video to generate a segmented user portion; and inserting the segmented user portion of the first video into the first portion of the 3D shared AR space.

In some embodiments, the method further comprises: transmitting, through an AR data channel, AR data corresponding to the 3D shared AR space to the participant device to cause the participant device to render the second video within the second portion of the 3D shared AR space.

In some embodiments, the method further comprises: detecting, by the client device, user movement during the video call; and rendering, within the digital video call interface, the first video captured by the client device within a third portion of the 3D shared AR space based on the detected user movement.

In some embodiments, the user movement comprises detected movement of a participant depicted within the first video or client device movement of the client device.

In some embodiments, the method further comprises: receiving, by the client device, a user interaction with the 3D shared AR space; modifying the 3D shared AR space corresponding to the first video based on the user interaction by adding an AR element to the 3D shared AR space or modifying an existing AR element within the 3D shared AR space; and transmitting, through an AR data channel, AR data corresponding to the user interaction to the participant device to cause the participant device to modify the 3D shared AR space corresponding to the second video.

In some embodiments, a modification to the 3D shared AR space corresponding to the first video and corresponding to the second video is positioned at a matching portion of the 3D shared AR space.

In some embodiments, the method further comprises: saving a modification to the 3D shared AR space for subsequent video calls between the client device and the participant device.

In accordance with a second aspect of the present disclosure, there is provided a non-transitory computer-readable medium storing instructions that, when executed by at least one processor, cause the at least one processor to: conduct, by a client device, a video call with a participant device by receiving video data through a video data channel established for the video call from the participant device; render, within a digital video call interface, a first video captured by the client device within a first portion of a three-dimensional (3D) shared augmented reality (AR) space; and display, within the digital video call interface, a second video from the participant device by rendering video data received through the video data channel, the second video portraying a second portion of the 3D shared AR space.

In some embodiments, rendering the first video within the first portion of the 3D shared AR space comprises: generating an AR background texture for the 3D shared AR space; and replacing a background of the first video with a portion of the AR background texture corresponding to the first portion of the 3D shared AR space.

In some embodiments, the non-transitory computer readable medium further comprises instructions that, when executed by the at least one processor, cause the at least one processor to: segment a user depicted within the first video from a background of the first video to generate a segmented user portion; and insert the segmented user portion of the first video into the first portion of the 3D shared AR space.

In some embodiments, the first portion and the second portion of the 3D shared AR space comprise different views of a synchronized AR environment.

In some embodiments, the non-transitory computer readable medium further comprises instructions that, when executed by the at least one processor, cause the at least one processor to: receive, by the client device, a selection of an additional 3D shared AR space; render, within the digital video call interface, the first video captured by the client device within a first portion of the additional 3D shared AR space; and transmit, through an AR data channel, AR data corresponding to the additional 3D shared AR space to the participant device to cause the participant device to render the second video within a second portion of the additional 3D shared AR space.

In accordance with a third aspect of the present disclosure, there is provided a system comprising: at least one processor; and at least one non-transitory computer-readable medium comprising instructions that, when executed by the at least one processor, cause the system to: conduct, by a client device, a video call with a participant device by receiving video data through a video data channel established for the video call from the participant device; render, within a digital video call interface, a first video captured by the client device within a first portion of a three-dimensional (3D) shared augmented reality (AR) space; and display, within the digital video call interface, a second video from the participant device by rendering video data received through the video data channel, the second video portraying a second portion of the 3D shared AR space.

In some embodiments, the system further comprises instructions that, when executed by the at least one processor, cause the system to receive AR data corresponding to the 3D shared AR space through an AR data channel from the participant device to render the first video within the first portion of the 3D shared AR space.

In some embodiments, rendering the first video within the first portion of the 3D shared AR space comprises: generating an AR background texture for the 3D shared AR space; and replacing a background of the first video with a portion of the AR background texture corresponding to the first portion of the 3D shared AR space.

In some embodiments, the system further comprises instructions that, when executed by the at least one processor, cause the system to: detect, by the client device, user movement during the video call, the user movement comprising detected movement of a participant depicted within the first video or client device movement of the client device; and render, within the digital video call interface, the first video captured by the client device within a third portion of the 3D shared AR space based on the detected user movement.

In some embodiments, the system further comprises instructions that, when executed by the at least one processor, cause the system to transmit, through an AR data channel, AR data corresponding to the 3D shared AR space to the participant device to cause the participant device to render the second video within the second portion of the 3D shared AR space.

Additional features and advantages of one or more embodiments of the present disclosure are outlined in the description which follows, and in part will be obvious from the description, or may be learned by the practice of such example embodiments.

### BRIEF DESCRIPTION OF THE DRAWINGS

The detailed description is described with reference to the accompanying drawings in which:
FIG. 1 illustrates an example environment in which a shared AR video call system can operate in accordance with one or more implementations.
FIG. 2 illustrates an example of a shared AR video call system establishing and facilitating a shared AR video call with a shared AR background environment between participant devices in accordance with one or more implementations.
FIG. 3 illustrates a flow diagram of a shared AR video call system facilitating a shared AR video call with a shared AR background environment in accordance with one or more implementations.
FIG. 4 illustrates a shared AR video call system utilizing a segmentation model to generate a segmented user portion from a video for a shared AR background environment in accordance with one or more implementations.
FIG. 5A and 5B illustrate a shared AR video call system enabling initialization of a shared AR background environment in a client device in accordance with one or more implementations.
FIG. 6 illustrates a shared AR video call system enabling a client device to display notifications of an initiated shared AR background environment in accordance with one or more implementations.
FIG. 7 illustrates a shared AR video call system enabling movement-based changes to a shared AR background environment in accordance with one or more implementations.
FIG. 8 illustrates a shared AR video call system enabling the initiating of a video call with a persistent shared AR background environment in accordance with one or more implementations.
FIG. 9 illustrates a shared AR video call system enabling a client device to modify a video interface layout to facilitate a video stream in accordance with one or more implementations.
FIG. 10 illustrates a shared AR video call system enabling a client device to modify a video interface layout to facilitate a menu interface in accordance with one or more implementations.
FIG. 11 illustrates a shared AR video call system enabling a client device to layer an AR avatar on a shared AR background environment video call in accordance with one or more implementations.
FIG. 12 illustrates a shared AR video call system positioning captured videos of video call participants within a shared AR space in accordance with one or more implementations.
FIG. 13 illustrates a shared AR video call system enabling a client device to utilize user interaction to navigate a user within a shared AR space in accordance with one or more implementations.
FIG. 14 illustrates a shared AR video call system enabling a client device to render video call participants within a shared AR space in accordance with one or more implementations.
FIGS. 15A and 15B illustrate a shared AR video call system enabling a client device to display selectable options to access an extended-reality environment in accordance with one or more implementations.
FIGS. 16A-16C illustrate a shared AR video call system enabling a client device to render an extended-reality environment as an AR space in accordance with one or more implementations.
FIG. 17 illustrates a shared AR video call system receiving a user interaction to modify a shared AR background environment in accordance with one or more implementations.
FIG. 18 a flowchart of a series of acts for enabling video calls which facilitate shared augmented reality (AR) background environments in accordance with one or more implementations.
FIG. 19 illustrates a block diagram of an example computing device in accordance with one or more implementations.
FIG. 20 illustrates an example environment of a networking system in accordance with one or more implementations.
FIG. 21 illustrates an example social graph in accordance with one or more implementations.

### DETAILED DESCRIPTION

This disclosure describes one or more embodiments of a shared augmented reality (AR) video call system that establishes video calls which facilitate shared augmented reality (AR) background environments (e.g., 360-degree view shared AR background environments) to create the perception that participants of the video call are present in the same location (or setting). For example, the shared AR video call system can enable a client device to segment one or more participants captured via video on the client device from a background depicted within the video. Moreover, the shared AR video call system can enable the client device to render, in place of the segmented backgrounds, an AR background environment. The AR background environment includes the captured video of the one or more participants within a shared AR background environment that is viewable from multiple viewing angles (e.g., 360 degrees, 270 degrees) utilizing movement of a participant and/or movement of the client device. Furthermore, the shared AR video call system can enable client devices to render shared AR background environments that are synchronized across the client devices participating in the video call (e.g., utilizing an AR data channel and/or individually rendering the same AR background environment on each client device).

In some instances, the shared AR video call system establishes video calls which facilitate shared AR background environments during the video calls. In some cases, the shared AR video call system enables a client device to segment a background from a participant within a captured video and render a shared AR background environment in place of the segmented background (e.g., placing a segmented user portion of a video within a shared AR background environment). In one or more embodiments, the shared AR video call system enables the client device to utilize movement of the client device and/or movement of the participant to render the shared AR background environment from various viewing angles (e.g., as a 360-degree background space). In addition, the shared AR video call system can enable the client device to provide a video stream of the participant with the shared AR background environment to other participant client devices during the video call.

In certain instances, the shared AR video call system enables the client devices of the video call to each render the shared AR background environment to synchronize the background space across the participant client devices. Indeed, the shared AR video call system enables the client devices to transmit data corresponding to the AR background environment via an AR data channel to other participant devices on the video call such that the AR background environment is synchronized across participant devices. For example, a first participant device can render a captured video of a first participant within a first portion of a shared 360 AR background environment (or three-dimensional shared AR background environment) and a second participant device can render a captured video of a second participant within a second portion of a shared 360 AR background environment.

To illustrate, the shared AR video call system can establish an augmented reality data channel to enable shared augmented reality video calls which facilitate the sharing of and interaction with augmented reality elements and/or 360 AR background environments during video calls between a plurality of client devices. In particular, in one or more embodiments, the shared AR video call system establishes a video data channel and an AR data channel for a video call between client devices. Indeed, in one or more embodiments, the shared AR video call system enables client devices that are conducting a video call to transmit (or share) AR data through the AR data channel such that the video call facilitates shared AR elements and/or interactive AR objects to enable shared AR environment scenes (e.g., AR background environments), AR effects, and/or AR-based games during a video call between a plurality of client devices.

In one or more embodiments, the shared AR video call system establishes (or utilizes) a multi-peer application programming interface (API) for a shared AR video call that enables client devices to transmit (and receive) AR data in addition to video and audio data during the video call. For instance, the shared AR video call system enables participant client devices to transmit (and receive) AR identifiers that provide instructions (or other information) to cause the rendering of one or more AR elements within a captured video of a client device through the AR data channel. Indeed, the shared AR video call system can enable client devices to utilize the AR data channel to synchronize the shared AR background environment across the participant client devices (as described above).

In one or more embodiments, the shared AR video call system enables a client device to provide, for display via a menu option interface during a video call, various selectable AR background environments. Upon receiving a selection of a selectable AR background environment, the shared AR video call system enables each participant client device on the video call to render the shared AR background environment in place of segmented backgrounds of videos captured on each of the participant client devices. Furthermore, the shared AR video call system can also enable a client device to notify, via a toast and/or notification display, that a participant device on the video call has changed or modified the selected AR background environment (in addition to rendering the newly selected AR background environment).

In some instances, the shared AR video call system maintains a persistent shared AR background environment between participants (or client devices of participants) between multiple video calls. In particular, the shared AR video call system can save (or remember) a shared AR background environment selection and/or modifications to a shared AR background environment between participant devices. Then, upon receiving or initiating a video call via a participant device with the same participant devices, the shared AR video call system can initiate the video call with the saved, shared AR background environment. In addition, the shared AR video call system can also enable the video call between the participant devices to include various AR effects (or objects) and/or various other modifications in the shared AR background environment (from historical video calls).

Additionally, the shared AR video call system can also enable a client device to modify a video call interface layout while displaying participants with AR background environments during the video call. For example, the shared AR video call system can modify a video call interface layout to present (or display) various additional functionalities or stylistic preferences while displaying participants with AR background environments during the video call. To illustrate, the shared AR video call system can modify a video call interface layout to display a media stream (e.g., a movie stream, a music stream with information), a video game (e.g., a video game that is playable during the video call), menu options, and/or video layout presentation styles (e.g., participant videos inside moving bubbles, participant videos bouncing).

Moreover, the shared AR video call system can enable a client device to utilize layering to render an AR background environment and an avatar for a participant captured on a video call. For example, the shared AR video call system can enable a client device to capture a video of a participant and render the participant as an avatar within a video call. In addition, the shared AR video call system can also enable the client device to render the AR background environment (with varying viewpoints based on movement) as a background for the rendered avatar within the video call.

In one or more embodiments, the shared AR video call system can cause a client device to impose videos of participants of the video call within an AR scene (e.g., the participants of the video call are portrayed to be within the 360 AR scene). As an example, in some cases, the shared AR video call system can also enable a client device to utilize video processing from another client device to impose video textures depicting participants of video calls as AR effects concurrently with an AR background environment (during the video calls). For example, the shared AR video call system can enable client devices that are conducting a video call to transmit (or share) video processing data to facilitate a client device to (locally) render video textures for participants of the video call within AR effects in the video call while also rendering an AR background environment. In certain implementations, the shared AR video call system can cause the client device to present a video call as an AR scene in which the participants of the video call are portrayed to be within the AR scene (as the video textures) instead of simply presenting captured videos between the client devices.

Furthermore, in one or more instances, the shared AR video call system can enable a client device to receive user interactions from a participant of a video call to interact with the AR background environment and/or modify the AR background environment. For instance, the shared AR video call system can enable a client device to modify an AR background environment (via user interactions) by inserting visual effects (or objects), such as, but not limited to paintings, drawings, writing, text, AR objects (e.g., AR furniture, AR vehicles, AR animals) within the AR background environment. In addition, the shared AR video call system can also enable client devices to utilize various other shared AR effects (e.g., shared AR objects, AR object movements, AR environments, AR games) via an AR data channel in accordance with one or more implementations herein.

In one or more embodiments, the shared AR video call system further enables a client device to render an AR space (and video textures of video call participants) as an AR background environment within a self-view buffer on the client device. For example, the client device can render an AR space (e.g., as an ambient space) and position captured videos of participants on the video call as elements within the AR space (e.g., as video cells). To illustrate, the shared AR video call system can enable a client device to render an AR space that portrays a three-dimensional room and position video cells of captured videos (of the video call) within the AR space (e.g., to emulate or portray the participants of the video calls being present in the same room or space).

As mentioned above, the shared AR video call system provides many technical advantages and benefits over conventional systems. For instance, the shared AR video call system can establish and enable dynamic and flexible video calls between a plurality of participant devices that include shared and interactive AR content. Indeed, unlike many conventional video call systems that are limited to rendering AR effects selected by a participant device for a captured video and streaming the captured video portraying the non-interactive (overlayed) AR effect to other client devices, the shared AR video call system enables participant devices to initiate AR effects (and/or other AR elements) that cause other participant devices on a video call to also render shared AR effects.

As an example, by utilizing an AR data channel between the plurality of participant devices during a video call, the shared AR video call system enables the plurality of participant devices to share AR data (e.g., AR elements and spatial attributes corresponding to the AR elements) between the plurality of participant devices. By enabling the sharing of AR data during a video call, the shared AR video call system facilitates a wide variety of AR effects and elements within video calls. For example, the shared AR video call system enables AR elements to flow freely between renderings of the captured videos from a plurality of participant devices while also being responsive to interactions detected by the plurality of participant devices. Indeed, in one or more embodiments, the shared AR video call system enables the rendering of a shared 360 AR background environment that is responsive to interactions and simulates a real-world space for participants of a video call.

In addition to the increased flexibility and functionality of AR elements across a plurality of participant devices during a video call, the shared AR video call system also accurately enables the sharing and interaction of AR elements during the video call. For example, by utilizing an AR data channel with a client device layer that filters and obtains AR data transmitted via the AR data channel during a video call, individual participant devices can render AR data using a fully captured video with other information (e.g., a non-compressed video that includes face tracking information and camera depth information) during the video call even when the AR effect is initiated by another client device. Additionally, due to the utilization and filtering of the AR data from the AR data channel, a participant device can efficiently receive AR data within a video call without the participant devices being flooded with data from the video call channels while a transmitting participant device transmits AR data in real time without determining or identifying recipient participant devices.

Moreover, the individual participant devices can accurately render 360 AR background environments using a fully captured video to realistically place a participant with the 360 AR space while efficiently synchronizing the 360 AR space with other participant devices via the AR data channel. In particular, the shared AR video call system can accurately segment participants captured in videos and insert the segmented videos within a rendered AR space. Indeed, through segmentation, the shared AR video call system can realistically insert participants of a video call within AR spaces that change according to the movement of a participant client device during the video call. Additionally, the shared AR video call system can facilitate an efficient synchronization of the 360 AR space across multiple client devices by enabling the client devices to share updates to the 360 AR space through the AR data channel.

As illustrated by the foregoing discussion, the present disclosure utilizes a variety of terms to describe features and benefits of the shared AR video call system. Additional detail is now provided regarding the meaning of these terms. For instance, as used herein, the term "video call" refers to an electronic communication in which video data is transmitted between a plurality of computing devices. In particular, in one or more embodiments, a video call includes an electronic communication between computing devices that transmits and presents videos (and audio) captured on the computing devices.

As used herein, the term "channel" refers to a medium or stream utilized to transfer data (e.g., data packets) between client devices and/or a network. In some cases, the term "video data channel" can refer to a medium or stream utilized to transfer video data between client devices and/or a network. Indeed, the video data channel can enable the transfer of a continuous stream of video data between client devices to display a video (e.g., a collection of moving image frames). In some cases, a video data channel can also include audio data for the captured video. In addition, the term "audio data channel" can refer to a medium or stream utilized to transfer audio data between client devices and/or a network that enables the transfer of a continuous stream of audio between client devices to play audio content (e.g., a captured recording from a microphone of a client device).

Additionally, as used herein, the term "augmented reality data channel" refers to a medium or stream utilized to transfer AR data between client devices and/or a network (for a video call). For example, the term "augmented reality data channel" can enable the transfer of a continuous stream (and/or a situational transmission and/or request) of AR data between client devices to communicate AR content and interactions with AR content between the client devices (e.g., AR elements, AR environment scenes, interactions with AR, AR object vectors). In some cases, the shared AR video call system utilizes data-interchange formats such as JavaScript Object Notation (JSON), real time protocol (RTP), and/or extensible markup language (XML) to write, transmit, receive, and/or read AR data from the AR data channel.

As used herein, the term "augmented reality element" (sometimes referred to as an "augmented reality object") refers to visual content (two dimensional and/or three dimensional) that is displayed (or imposed) by a computing device (e.g., a smartphone or head mounted display) on a video (e.g., a live video feed) of the real world (e.g., a video capturing real world environments and/or users on a video call). In particular, the term "augmented reality element" can include a graphical object, digital image, digital video, text, and/or graphical user interface displayed on (or within) a computing device that is also rendering a video or other digital media. For example, an augmented reality element can include a graphical object (e.g., a three dimensional and/or two-dimensional object) that is interactive, manipulatable, and/or configured to realistically interact (e.g., based on user interactions, movements, lighting, shadows) with an environment (or person) captured in a video of a computing device. Indeed, in one or more embodiments, an AR element can modify a foreground and/or background of a video and/or modify a filter of a video.

As used herein, the term "augmented reality identifier" refers to information that references or addresses a particular AR element. In particular, the term "augmented reality identifier" can include a value (e.g., numerical, alphanumerical, address, API call) that references a particular AR element. For instance, upon receiving an AR identifier, a participant device can utilize the AR identifier to retrieve and/or identify a particular AR element from storage and/or library of AR elements (e.g., downloaded on the participant device and/or accessible on a cloud service during the video call).

Additionally, as used herein, the term "augmented reality environment scene" (sometimes referred to as "shared augmented reality scene") refers to one or more augmented reality elements that are interactive, manipulatable, and/or configured to realistically interact with each other and/or user interactions detected on a computing device. In some embodiments, an augmented reality environment scene includes one or more augmented reality elements that modify and/or portray a graphical environment in place of a real-world environment captured in a video of a computing device. As an example, the shared AR video call system can render an augmented reality environment scene to portray one or more participants of a video call to be within a graphical environment (e.g., in space, underwater, at a campfire, in a forest, at a beach) within a captured video of a computing device. In some cases, the shared AR video call system further enables augmented reality elements within the augmented reality environment scene to be interactive, manipulatable, and/or configured to realistically interact to user interactions detected on a plurality of participant devices.

In addition, an augmented reality environment scene can include an augmented reality background environment (or augmented reality background environment). As used herein, the term "augmented reality environment scene" (sometimes referred to as a three-dimensional shared augmented reality space with varying viewpoint degrees or 360 augmented reality background environment) refers to one or more augmented reality elements that portray a graphical environment in place of a background in a real-world environment captured in a video of a computing device as a 360-degree space (or various other multi-view spaces). For example, the shared AR video call system can cause a client device to render a 360 augmented reality background environment within a video that represents a 360-degree space (e.g., with an on-screen rendered background and off-screen portions of the background) as a background for a participant. Additionally, the shared AR video call system can cause a client device to render different portions of the 360-degree space of the 360 augmented reality background environment when movement is detected from a participant client device (or a participant captured in a video on the participant client device). As an example, a 360 AR background environment can include a 360 AR space depicting spaces, such as a virtual office space, a virtual beach house, a virtual city, a virtual space station, a virtual museum, and/or a virtual aquarium. In one or more embodiments, the 360 AR background environment (or shared augmented reality background space) can include both two-dimensional and/or three-dimensional environments.

Furthermore, the term "segmentation" refers to a computer-based process to identify and partition particular regions (or segments) within an image (or video). For example, in one or more embodiments, the shared AR video call system can enable a client device to segment a background of a video from a foreground of the video (e.g., a foreground that portrays a salient subject, such as a person to generate a segmented user portion). In some cases, the shared AR video call system can enable a client device to segment a participant user depicted within a video from the background of the video to generate a video layer that depicts the participant user with a transparent background (i.e., a segmented user portion). In one or more instances, the shared AR video call system can enable a client device to utilize various image (or video) processing tools to perform segmentation, such as, but not limited to, machine learning-based segmentation models or classifiers (e.g., convolutional neural networks, generative adversarial neural networks).

Moreover, as used herein, the term "augmented reality effect" refers to one or more augmented reality elements that present (or display) an interactive, manipulatable, and/or spatially aware graphical animation. In particular, the term "augmented reality effect" can include a graphical animation that realistically interacts with a person (or user) or with a scene (or environment) captured within a video such that the graphical animation appears to realistically exist within the environment of the person within the captured video (e.g., a graphic-based environment or an environment captured in a video). As an example, an augmented reality effect can include graphical confetti, graphical hats worn by video call participants, modifications to persons captured within the video call (e.g., wearing a mask, change to appearance of a participating user on a video call, change to clothing, an addition of graphical accessories, a face swap), and/or graphical characters, objects (e.g., vehicles, plants, buildings).

In some cases, an AR element can include visual content (two dimensional and/or three dimensional) that is displayed (or imposed) by a computing device (e.g., a smartphone or head mounted display) on a video (e.g., a live video feed) of the real world (e.g., a video capturing real world environments and/or users on a video call). In particular, an AR element can include a graphical object, digital image, digital video, text, and/or graphical user interface displayed on (or within) a computing device that is also rendering a video or other digital media. For example, an AR element can include a graphical object (e.g., a three dimensional and/or two-dimensional object) that is interactive, manipulatable, and/or configured to realistically interact (e.g., based on user interactions, movements, lighting, shadows) with a graphic-based environment or an environment (or person) captured in a video of a computing device. Indeed, in one or more embodiments, an AR element can modify a foreground and/or background of a video and/or modify a filter of a video.

As further used herein, the term "augmented reality object vector" refers to a collection of data that represents spatial information for an AR element (e.g., a graphical AR object). In particular, the term "augmented reality object vector" can include a directional value (e.g., a two-dimensional and/or three-dimensional coordinate, angles) and/or a magnitude value (e.g., representing a velocity and/or acceleration). Indeed, in one or more embodiments, the shared AR video call system utilizes an AR object vector to determine a direction of movement for an AR element.

As further used herein, the term "participant identifier" refers to a value that points to or uniquely identifies a participant device (or participant) within an electronic communication (e.g., a video call). For example, the shared AR video call system utilizes a participant identifier to determine a recipient participant device for a transmitted AR identifier or AR element. In some instances, a participant device includes a participant identifier with an AR element or identifier to designate a subject participant device when the AR element or identifier is transmitted. Subsequently, the subject participant device can detect the participant identifier and, as a result, utilize the AR element or identifier to render an AR environment within a captured video (e.g., upon determining that the participant identifier matches an identifier assigned to the subject participant device).

As further used herein, the term "user interaction" refers to an action or input detected by a participant device via a camera, touch screen, and/or computer peripheral (e.g., mouse, keyboard, controller). In some cases, the term "user interaction" includes a user input that interacts with a displayed AR element. Furthermore, the term "user interaction" can include a movement interaction detected by a camera of a client device. For example, a movement interaction can include a physical movement of a user (e.g., a face movement, an arm movement, a leg movement) detected by a camera that intersects (or relates to) a position of an AR element. As an example, a movement interaction can include, but is not limited to, detecting, using a client device camera, a user tapping an AR element, swatting an AR element, and/or kicking an AR element. Additionally, a movement interaction can include, but is not limited to, detecting, using the client device camera, eyes of a user opening, a user taking an action to blow air at an AR-based object (e.g., blowing out an AR-based candle, blowing away AR-based leaves), and/or a user taking an action to bite an AR-based object (e.g., eating AR-based food, moving an AR-based object using head movements).

As used herein, the term "extended-reality environment" refers to a simulated environment in which users can fully or partially immerse themselves. For example, an extended-reality environment can comprise virtual reality, augmented reality, etc. An extended-reality environment can include objects and elements with which a user can interact. In general, a user participates in a virtual environment using a client device, such as a dedicated extended-reality device.

As used herein, the term "extended-reality device" refers to a computing device having extended reality capabilities and/or features. In particular, an extended-reality device can refer to a computing device that can display an extended reality graphical user interface. An extended-reality device can further display one or more visual elements within the extended reality graphical user interface and receive user input that targets those visual elements. For example, an extended-reality device can include, but is not limited to, a virtual reality device, an augmented reality device, or a mixed reality device. In particular, an extended-reality device can comprise a head-mounted display, a smartphone, or another computing device.

As further used herein, the term "avatar" (sometimes referred to as a "digital avatar") refers to a visually human-like (e.g., anthropomorphic), three-dimensional representation (or persona) of a user within an AR environment. As an example, an avatar can include a three-dimensional representation of a user that provides a realistic (e.g., accurate, life-like, and/or photorealistic) portrayal of the user within the AR environment. Additionally, an avatar can also include a three-dimensional representation of a user that provides a simplified (e.g., animated, caricature-like, cartoon-like) portrayal of the user within the AR environment.

Furthermore, as used herein, the term "video processing data channel" refers to a medium or stream utilized to transfer video processing data between client devices and/or a network (for a video call). For instance, the term "video processing data channel" can enable the transfer of a continuous stream (and/or a situational transmission and/or request) of video processing data between client devices to communicate data from an analysis of (raw) videos captured at the individual client device level. In some implementations, the shared AR video call system utilizes data-interchange formats such as JavaScript Object Notation (JSON), real time protocol (RTP), and/or extensible markup language (XML) to write, transmit, receive, and/or read video processing data from the video processing data channel.

As also used herein, the term "video processing data" refers to data representing properties of a video. In particular, the term "video processing data" can refer to data representing properties or characteristics of one or more objects depicted within a video. For example, video processing data can include face tracking (or face recognition) data that indicates features and/or attributes of one or more faces depicted within a video (e.g., vectors and/or points that represent a structure of a depicted face, bounding box data to localize a depicted face, pixel coordinates of a depicted face). In addition, video processing data can include segmentation data that indicates background pixels and/or foreground pixels (e.g., saliency) and/or mask data that utilize binary (or intensity values) per pixel to represent various layers of video frames (e.g., to distinguish or focus on objects depicted in a frame, such as hair, persons, faces, and/or eyes).

In some cases, the shared AR video call system can generate (or cause a client device to generate) combined video data from video data and video processing data. For example, in some cases, combined video data can include a split frame that include a video frame in a first portion of the frame (e.g., a lower resolution frame of from an original video frame) and video processing data (e.g., a segmentation mask, face tracking pixels) on the second portion of the frame. In one or more implementations, combined video data can include alternating frames in which a first frame includes a video frame and a second, subsequent video frame includes video processing data in a video stream.

In addition, video processing data can include alpha channel data that indicates degrees of transparency for various color channels represented within video frames. Furthermore, video processing data can include participant metadata that can classify individual participants, label individual participants (e.g., using participant identifiers), participant names, statuses of participants, and/or number of participants. The video processing data can also include metadata for the video stream (e.g., a video resolution, a video format, camera focal length, camera aperture size, camera sensor size). Indeed, the shared AR video call system can enable client devices to transmit video processing data that indicates various aspects and/or characteristics of a video or objects depicted within a video.

As used herein, the term "video texture" refers to a graphical surface that is applied to a computer graphics obj ect to superimpose the computer graphics obj ect with a video. In one or more embodiments, the term "video texture" refers to a computer graphics surface generated from a video that overlays or superimposes (i.e., maps) a video onto a graphics-based object (a three-dimensional object or scene, a still image, or a two-dimensional animation or scene). In some embodiments, the shared AR video call system enables a client device to render a video as a video texture within an AR effect such that the video texture depicts a captured video of a participant superimposed onto an AR effect within an AR scene (or environment).

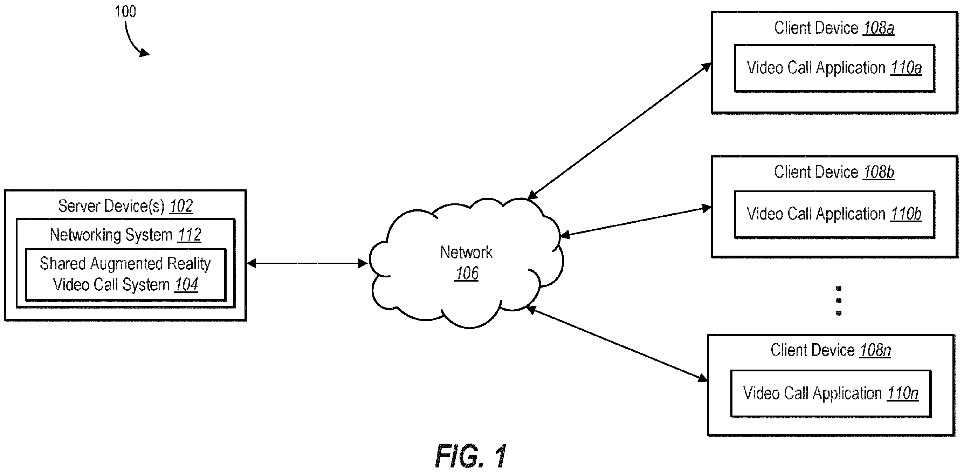

Additional detail regarding the shared AR video call system will now be provided with reference to the figures. For example, FIG. 1 illustrates a schematic diagram of an exemplary system environment ("environment") 100 in which a shared augmented reality video call system 104 (also referred to as a "shared AR video call system 104") can be implemented. As illustrated in FIG. 1, the environment 100 includes a server device(s) 102, a network 106, and client devices 108a, 108b-108n.

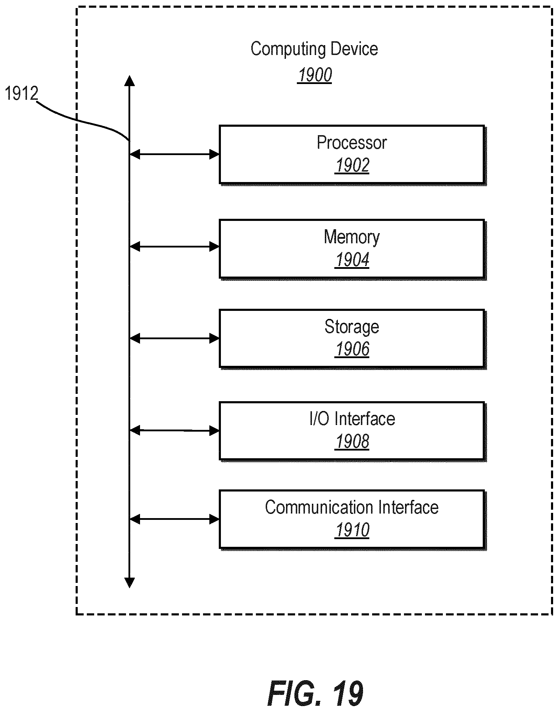

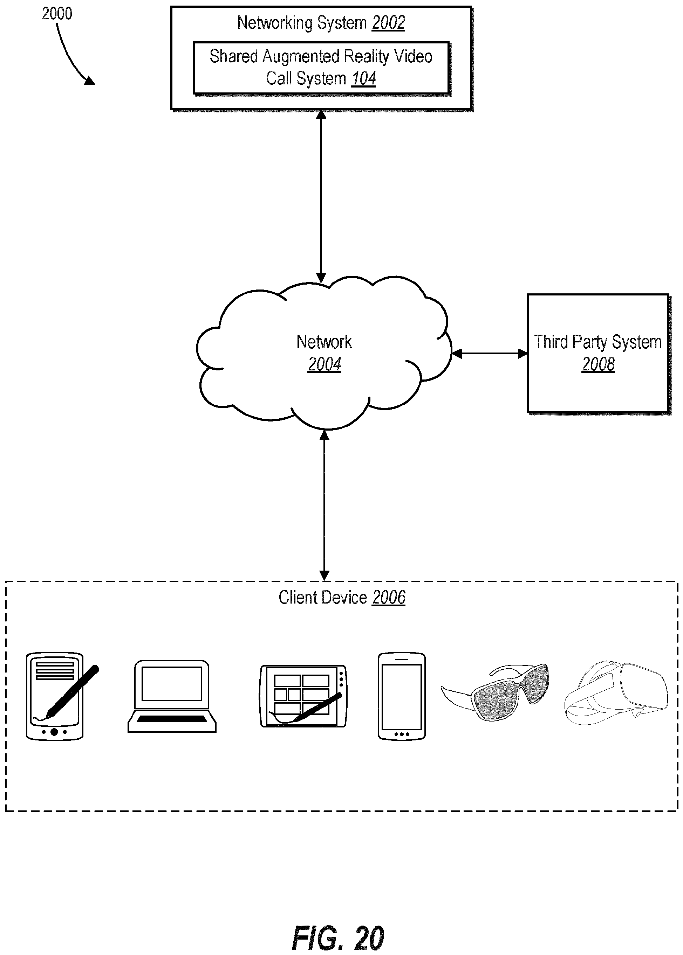

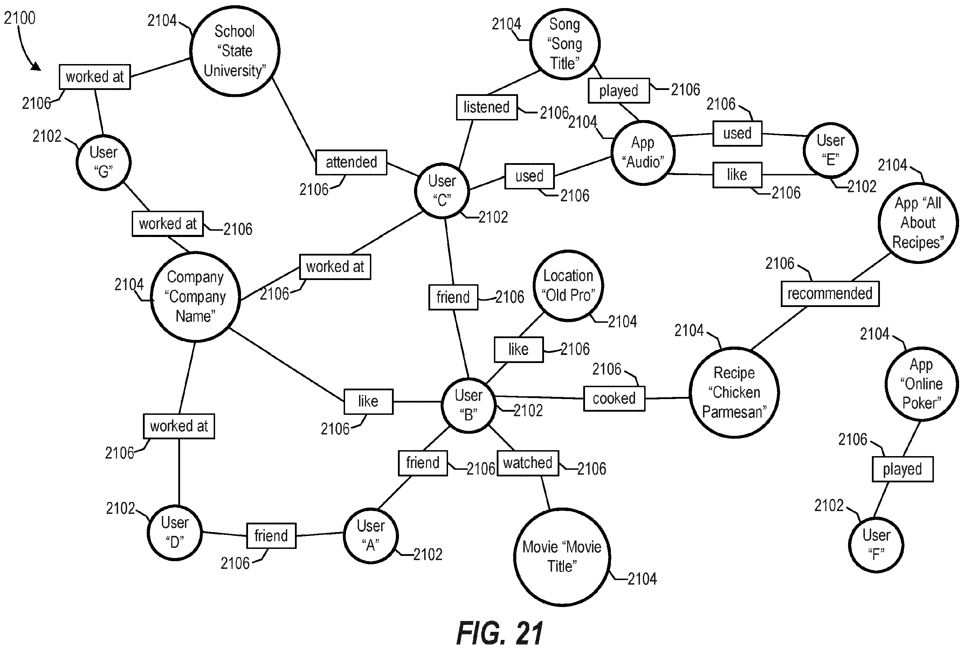

Although the environment 100 of FIG. 1 is depicted as having a particular number of components, the environment 100 can have any number of additional or alternative components (e.g., any number of server devices and/or client devices in communication with the shared AR video call system 104 either directly or via the network 106). Similarly, although FIG. 1 illustrates a particular arrangement of the server device(s) 102, the network 106, the client devices 108a, 108b-108n, various additional arrangements are possible. The server device(s) 102, the network 106, and the client devices 108a, 108b-108n may be communicatively coupled with each other either directly or indirectly (e.g., through the network 106 discussed in greater detail below in relation to FIGS. 20 and 21). Moreover, the server device(s) 102 and the client devices 108a, 108b-108n may include a variety of computing devices (including one or more computing devices as discussed in greater detail with relation to FIGS. 19 and 20).

As mentioned above, the environment 100 includes the server device(s) 102. In one or more embodiments, the server device(s) 102 generates, stores, receives, and/or transmits digital data, including digital data related to video data and AR data for video calls between client devices (e.g., client devices 108a, 108b-108n). In some embodiments, the server device(s) 102 comprises a data server. In one or more embodiments, the server device(s) 102 comprises a communication server or a web-hosting server.

As shown in FIG. 1, the server device(s) 102 includes a networking system 112. In particular, the networking system 112 can provide a digital platform (e.g., an extended-reality platform, a messenger platform, a video call platform) that includes functionality through which users of the networking system 112 can connect to and/or interact with one another. For example, the networking system 112 can register a user (e.g., a user of one of the client devices 108a, 108b-108n). The networking system 112 can further provide features through which the user can connect to and/or interact with co-users. For example, the networking system 112 can provide messaging features, video call features, and/or chat features through which a user can communicate with one or more co-users. The networking system 112 can also generate and provide groups and communities through which the user can associate with co-users.

In one or more embodiments, the networking system 112 comprises a social networking system, but in other embodiments the networking system 112 may comprise another type of system, including but not limited to an e-mail system, video call system, search engine system, e-commerce system, banking system, metaverse system or any number of other system types that use user accounts. For example, in some implementations, the networking system 112 generates and/or obtains data for a client device (e.g., client devices 108a, 108b-108n) via the server device(s) 102.

In one or more embodiments where the networking system 112 comprises a social networking system, the networking system 112 may include a social graph system for representing and analyzing a plurality of users and concepts. A node storage of the social graph system can store node information comprising nodes for users, nodes for concepts, and nodes for items. An edge storage of the social graph system can store edge information comprising relationships between nodes and/or actions occurring within the social networking system. Further detail regarding social networking systems, social graphs, edges, and nodes is presented below with respect to FIGS. 20 and 21.

As further shown in FIG. 1, the server device(s) 102 includes the shared AR video call system 104. In one or more embodiments, the shared AR video call system 104 establishes a video data channel and an AR data channel between client devices to enable a video call with shared AR elements between the client devices. Indeed, in one or more embodiments, the shared AR video call system 104 establishes a video call with interactive shared AR elements between various numbers of client devices from the client devices 108a, 108b-108n. In some cases, the shared AR video call system 104 can enable video calls which facilitate a shared 360 AR background environments. Furthermore, in one or more embodiments, the shared AR video call system 104 is implemented as part of a social networking system that facilitates electronic communications such as instant messaging, video calling, and/or social network posts (e.g., as discussed in greater detail with relation to FIGS. 20 and 21).

Moreover, in one or more embodiments, the environment 100 includes the client devices 108a, 108b-108n. For example, the client devices 108a, 108b-108n can include computing devices that are capable of interacting with the shared AR video call system to conduct video calls (and/or) other electronic communications with one or more other client devices. Indeed, the client devices 108a, 108b-108n can capture videos from digital cameras of the client devices 108a, 108b-108n and further utilize AR data from an AR data channel of a video call to render AR elements within the captured videos. Furthermore, in one or more embodiments, the client devices 108a, 108b-108n can render a shared augmented reality (AR) background environment. In some implementations, the client devices 108a, 108b-108n include at least one of a smartphone, a tablet, a desktop computer, a laptop computer, a head mounted display device, or other electronic device.

Additionally, in some embodiments, each of the client devices 108a, 108b-108n is associated with one or more user accounts of a social network system (e.g., as described in relation to FIGS. 20 and 21). In one or more embodiments, the client devices 108a, 108b-108n include one or more applications (e.g., the video call applications 110a, 110b-110n) that are capable of interacting with the shared AR video call system 104, such as by initiating video calls, transmitting video data and/or AR data, and/or receiving video data and/or AR data). In addition, the video call applications 110a, 110b-110n are also capable of utilizing video call data and/or AR data to render AR elements within a captured video of a user operating the client device. In some instances, the video call applications 1 10a, 110b-11 0n include software applications installed on the client devices 108a, 108b-108n. In other cases, however, the video call application 110a, 110b-110n includes a web browser or other application that accesses a software application hosted on the server device(s) 102. In some cases, the video call applications 110a, 110b-110n can include the same video call application and/or multiple video call applications (e.g., two different applications that support video calls) that enable video calls between client devices (e.g., the client devices 108a, 108b-108n) via cross platform support. In some cases, one or more of the client devices 108a, 108b-108n can stream a video stream of multiple participants (using a combination of captured videos, shared AR effects, and/or 360 AR background environments) to viewing client devices that view the video stream without participating as participants of the video stream.

The shared AR video call system 104 can be implemented in whole, or in part, by the individual elements of the environment 100. Indeed, although FIG. 1 illustrates the shared AR video call system 104 implemented with regard to the server device(s) 102, different components of the shared AR video call system 104 can be implemented by a variety of devices within the environment 100. For example, one or more (or all) components of the shared AR video call system 104 can be implemented by a different computing device (e.g., one of the client devices 108a, 108b-108n) or a separate server from the server device(s) 102.

As mentioned above, the shared AR video call system 104 enables video calls which facilitate a shared 360 AR background environment. Indeed, in one or more embodiments, the shared AR video call system 104 causes one or more participant client devices of a video call to render a shared 360 AR background environment. In some cases, the shared AR video call system 104 also causes a participant client device to display different viewpoints (or portions) of an AR background space upon detecting movement on the client device (and/or upon detecting movement of a participant captured on video via the client device).

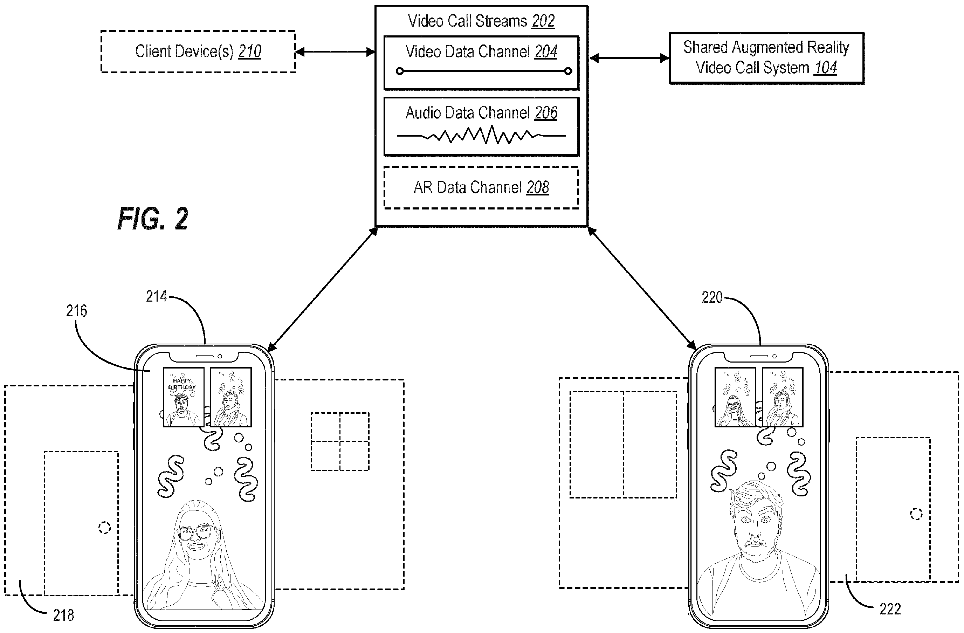

For example, FIG. 2 illustrates the shared AR video call system 104 establishing a video call between participant client devices with a shared 360 AR background environment (within video call interfaces). As shown in FIG. 2, the shared AR video call system 104 can cause a client device 214 to render a 360 AR background environment (or a 3D shared AR space) that replaces a background of a captured video on the client device 214. For example, as shown in FIG. 2, the shared AR video call system 104 establishes a video call between a client device 214, 220 (and 210) by establishing video call streams 202 which includes a video data channel 204, an audio data channel 206, and an AR data channel 208. As shown in FIG. 2, the rendered 360 AR background environment includes an on-screen portion 216 of a 360-degree space and an off-screen portion 218 of the 360-degree space. In one or more embodiments, the shared AR video call system 104 can render various portions of the on-screen portion 216 and the off-screen portion 218 of the 360-degree space upon detecting movement of the client device 214. Moreover, as shown in FIG. 2, the rendered 360 AR background environment on the client device 220 also includes an off-screen portion 222 of the 3D shared AR space.

Additionally, as shown in FIG. 2, the shared AR video call system 104 enables the client devices (e.g., the client device 214 and the client device 220) to render a shared 360 AR background environment during the video call. Indeed, as shown in FIG. 2, the shared AR video call system 104 causes the client devices 214, 220 to render shared 360 AR background environments such that participants of the video call are perceived to be in the same space (or location).

As further shown in FIG. 2, the client devices 214, 220 (and 210) render 360 AR background environment and generate video streams to transmit over the video call streams 202. As illustrated in FIG. 2, the client devices 214, 220 (and 210) can each utilize a video data channel 204 to transmit video streams of participants with a rendered 360 AR background environment in the background (to the other client devices) during a video call. Moreover, in some cases, the client devices 214, 220 (and 210) can each utilize an audio data channel 206 to transmit audio streams of participants (to the other client devices) during the video call.

In some instances, each client device participating in the video call renders separate 360 AR background environments and captures a video stream to send over a video data channel. In particular, in some cases, the client devices render separate 360 AR background environments that depict the same (or similar) AR background space. Indeed, the shared AR video call system 104 can enable the client devices to render separate 360 AR background environments that create a similar AR background space across the participant device videos to create the perception that the participants of the video call are in the same space.

In one or more embodiments, the shared AR video call system 104 enables the client devices (e.g., client devices 214, 220, 210) to render a synchronized 360 AR background environment as the shared 360 AR background environment. For example, in reference to FIG. 2, the shared AR video call system 104 can enable the client devices 214, 220 (and 210) to utilize an AR data channel 208 to share data corresponding to the synchronized 360 AR background environment. For example, the shared AR video call system 104 can enable client devices participating in a video call to transmit (or share) augmented reality data to render a synchronized 360 AR background environment, such as, but not limited to, AR element identifiers, AR element information, logic data objects, object vectors, and/or participant identifiers (in accordance with one or more implementations herein).

In some instances, as shown in FIG. 2, the shared AR video call system 104 can also enable shared AR effects between client devices during a video call with a 360 AR background environment. Indeed, as shown in FIG. 2, the shared AR video call system 104 enables a shared AR effect (e.g., birthday confetti) between the client devices 214, 220 via the AR data channel 208. In some cases, a client device can transmit AR data (such as an AR identifier) via an AR data channel to other client devices on a video call to initiate an AR effect on the video call. In addition, upon receiving the AR data, the one or more client devices render an AR effect during the video call (as described above) while also rendering a 360 AR background environment.

For example, the shared AR video call system 104 enables participant client devices to transmit (and receive) AR object vector data to provide instructions (or other information) that are utilized to determine positioning and/or other spatial information for an AR object when the AR object is being rendered in conjunction with a captured video of a receiving client device. Furthermore, the shared AR video call system 104 also enables participant client devices to transmit (and receive) AR data such as, but not limited to, identifiers to designate which video call participant device renders a specific AR element and/or selectors that designate a subject participant client device for a particular AR effect (e.g., a birthday effect that is targeted to a subject participant client device).

Moreover, in some embodiments, the shared AR video call system 104 establishes a shared AR video call that enables client devices to transmit (and receive) AR data during a video call to create or render shared AR background environments (or shared AR environment scenes) across the video call. For example, the shared AR video call system 104 can enable participant client devices to transmit (and receive) AR identifier data such that the participant client devices each render a shared AR background environment while conducting a video call. For example, when a participant client device initiates a shared AR-based background environment during a video call (as described herein), the participant client device transmits AR data to one or more other client devices on the video call. Then, the receiving one or more other client devices utilize the AR data to render the shared AR-based background environment within their respective captured videos. By doing so, the participating client devices in the video call render an AR background environment that is cohesive within the videos of each individual participating client device of the video call.

In some cases, the shared AR video call system 104 also enables the participant client devices to interact with the shared AR background environment and/or objects in the AR background environment such that the interactions are reflected within the shared AR background environment of one or more of the individual participating client devices. For example, upon interacting with an AR element in a captured video of a first participant client device, the first participant client device can render a modified AR element (due to the interaction) and also transmit AR data for the interaction with the AR element to a second participating client device of the video call. When the second participating client device receives the AR data through the AR data channel of the video call, the second participating client device can render the modified AR element to account for the interaction taken place on the first participating client device.

Additionally, in some embodiments, the shared AR video call system 104 enables AR objects to move or transition between a shared AR background environment in a video call between a plurality of participant client devices. For instance, a first participant client device can render a first captured video with an AR object in the first captured video. Then, the first participant client device can detect that the AR object in the first captured video is moving to a position that is out of the viewing frame of the first captured video. The first participant client device can transmit AR data via the AR data channel that includes information for the AR object, an object vector for the AR object, and a participant identifier for the AR object (e.g., to indicate which participant client device will render the AR object). Then, a second participant client device on the video call can receive the AR data through the AR data channel to render the AR object within a second captured video of the second participant client device utilizing the information for the AR object, an object vector for the AR object, and a participant identifier for the AR object (at a different position or portion of the multi-view shared AR background environment).

Furthermore, in some embodiments, the shared AR video call system 104 enables participant client devices to interact with AR activities during a video call. For instance, the participant client devices render and interact with AR objects between the plurality of client devices for one or more AR activities (e.g., an AR-based game) during a video call by utilizing the AR data channel (established by the shared AR video call system). As an example, a first participant client device can render an AR object as part of an AR game (e.g., a hockey puck, a table tennis ball) within a first video of the first participant client device. Then, in one or more embodiments, the first participant client device can detect a user interaction that modifies the AR object (e.g., moves the hockey puck, moves the table tennis ball) and transmit AR data to a second participant client device for the modified AR object. Subsequently, the second participant client device can detect that the AR object is transitioning to a second video captured by the second participant client device and render the AR object within the second participant client device (e.g., receiving a hockey puck that is hit towards the user of the second participant device, receiving a table tennis ball that is hit towards the user of the second participant device). Indeed, the first and second participant devices can move the AR object between the devices during the video call to interact with an AR-based game while also rendering a shared AR background environment.

In addition, the shared AR video call system 104 can enable participant client devices to send (and render) AR effects to other participant client devices in a video call. For instance, a first participant client device can receive a selection of an AR effect and transmit AR identifier data for the AR effect to a second participant client device via the AR data channel. Then, the second participant device can receive the AR identifier data for the AR effect and render the AR effect on a second captured video of the second participant device. In particular, in one or more embodiments, the second participant device can render the AR effect to interact with a user portrayed in the second captured video (e.g., an AR object depicting a birthday hat being worn by the portrayed user, an AR object depicting an animated character sitting on the shoulder of the portrayed user).

In some embodiments, the shared AR video call system 104 utilizes an AR data channel to facilitate a real time transfer of AR data during a video call. For example, during a video call, the shared AR video call system 104 can establish an AR data channel that facilitates that transmission (and reception) of additional data (e.g., in addition to video and audio data) during a video call to share interactive AR environments, AR effects, AR-based activities, and/or individual AR elements during a video call. For instance, the shared AR video call system 104 can enable client devices to transmit AR data such as AR identifiers (e.g., that point to AR elements), AR elements, AR object vectors (for positions and directions of AR elements), user interactions with AR elements, modifications to AR elements, and/or other updates corresponding to AR environments, AR effects, AR-based activities, and/or individual AR elements during a video call.

Additionally, in some instances, the client devices of a video call initialize a shared AR background environment (or other AR element) prior to rendering the shared AR background environment when sharing the shared AR background environment across an AR data channel. In particular, client devices can both initialize the shared AR background environment prior to rendering the shared AR background environment. In one or more embodiments, one or more client devices receive an AR identifier and wait until each client device initializes the shared AR background environment to synchronize the shared AR experience across the multiple client devices on the video call. Indeed, upon initializing, the client devices can transmit (through the AR data channel) to other client devices a message indicating that the client device is ready to render the shared AR background environment (or has initialized the shared AR background environment).

In some cases, a client device can initialize a shared AR background environment by retrieving the shared AR background environment, loading the shared AR background environment, and/or downloading a particular AR data package to render the shared AR background environment. Upon receiving an initialized message from each client device on a video call, individual client devices can continue to render the shared AR background environment.

Furthermore, in one or more embodiments, the client devices (or the shared AR video call system 104) pause the one or more video streams of the video call until initialization of a shared AR background environment is complete on each of the participating client devices. In some cases, the shared AR video call system 104 streams (or displays) a loading screen (or loading animation) until the shared AR background environment is initialized on each of the participating client devices. Additionally, in one or more embodiments, the shared AR video call system 104 enables the client devices to continue to transmit and/or receive audio data via the audio data channel and play audio of one or more client devices on the video call while the shared AR background environment initializes on the plurality of client devices.

In one or more embodiments, client devices can continue to transmit various combinations of data between the client devices during a video call (e.g., through a video data channel, audio data channel, and/or AR data channel). Indeed, the client devices can transmit various combinations of video data, audio data, and/or AR data to render various AR experiences during a video call, such as a shared AR background environment. Furthermore, although one or more implementations demonstrate data transmissions between two client devices interacting within a video call, the shared AR video call system 104 can establish a video call to transmit various combinations of video data, audio data, and/or AR data to render various AR experiences during a video call between various numbers of client devices. In addition, one or more of the client devices (participating in a video call) can change a shared AR background environment, activity, and/or effect via selection of a different AR environment, activity, and/or effect during the video call.

For instance, the shared AR video call system 104 can establish an AR data channel and enable AR effects (e.g., such as a shared AR background environment) during a video call as described by Jonathan Michael Sherman et al., Utilizing Augmented Reality Data Channel to Enable Shared Augmented Reality Video Calls, U.S. Patent Application No. 17/650,484 (filed February 9, 2022) (hereinafter "*Sherman*").

Additionally, although FIG. 2 illustrates a certain number of client devices participating in a video call, the shared AR video call system 104 can establish a video call between various numbers of client devices. In addition, the shared AR video call system 104 can also enable various numbers of client devices to render shared 360 AR background environments during the video call.

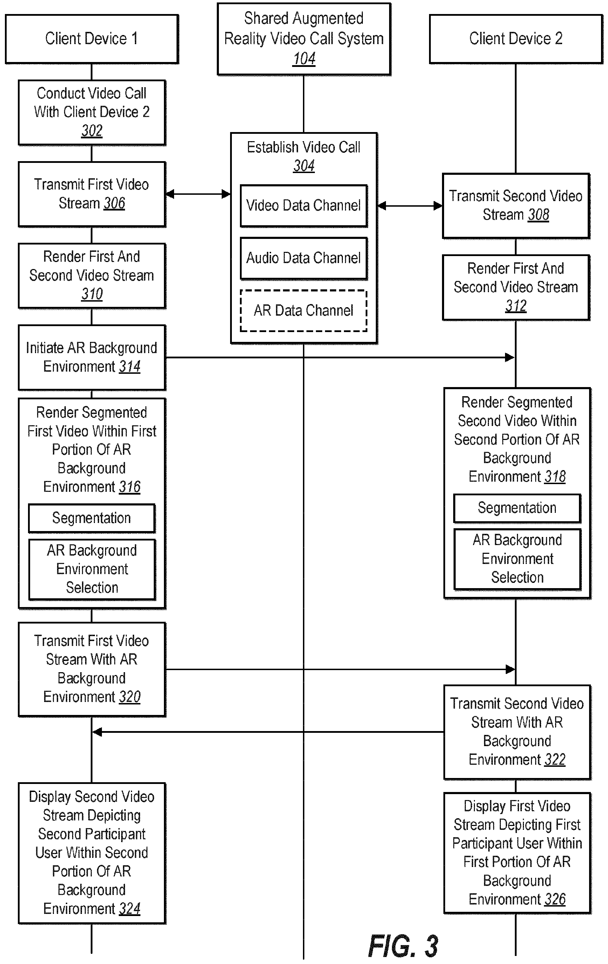

Additionally, FIG. 3 illustrates a flow diagram of the shared AR video call system 104 establishing a video call with shared AR background environments across participant client devices. For instance, as shown in FIG. 3, the shared AR video call system 104 receives, in an act 302, a request to conduct a video call with a client device 2 from a client device 1 (e.g., a request to initiate a video call). Subsequently, as shown in act 304 of FIG. 3, the shared AR video call system 104 establishes a video call between the client device 1 and the client device 2 (e.g., which includes a video data channel, an audio data channel, and, in some cases, an AR data channel). In some instances, the shared AR video call system 104 can enable the client devices to render (or share) AR background environments (or AR effects) through the AR data channel as described above.

As further shown in act 306 of FIG. 3, the client device 1 transmits a first video stream (e.g., a video stream captured on the client device 1) to the client device 2 through the video data channel and the audio data channel. Furthermore, as shown in act 308 of FIG. 3, the client device 2 transmits a second video stream (e.g., a video stream captured on the client device 2) to the client device 1 through the video data channel and the audio data channel. Furthermore, as shown in act 310 of FIG. 3, the client device 1 renders the first and second video stream. Likewise, as shown in act 312 of FIG. 3, the client device 2 also renders the first and second video stream.

Additionally, as shown in act 314 of FIG. 3, the client device 1 receives a request to initiate an AR background environment. As shown in act 316, the client device 1 renders a segmented video (from the first video stream) within a first portion of an AR background environment. Indeed, as illustrated in the act 316, the client device 1 utilizes segmentation and an AR background environment selection to render the segmented user portion of the first video within the first portion of the shared AR background environment.

As further shown in act 318 of FIG. 3, upon receiving an indication of the client device 1 initiating an AR background environment (e.g., as shown in the act 314), the client device 2 renders a segmented video (from the second video stream) within a second portion of an AR background environment. Indeed, as illustrated in the act 318, the client device 2 utilizes segmentation and the AR background environment selection (from client device 1) to render the segmented user portion of the second video within the second portion of the shared AR background environment.

Moreover, as shown in act 320, the client device 1 transmits the first video stream with the rendered AR background environment to the client device 2 during the video call. Likewise, as shown in act 322, the client device 2 transmits the second video stream with the rendered AR background environment to the client device 1 during the video call. Indeed, as illustrated in act 326 of FIG. 3, upon receiving the first video stream with the rendered AR background environment, the client device 2 renders the first video stream depicting a first participant user within a first portion of the AR background environment. Moreover, as shown in act 324, the client device 1 renders the second video stream depicting a second participant user within a second portion of the AR background environment.

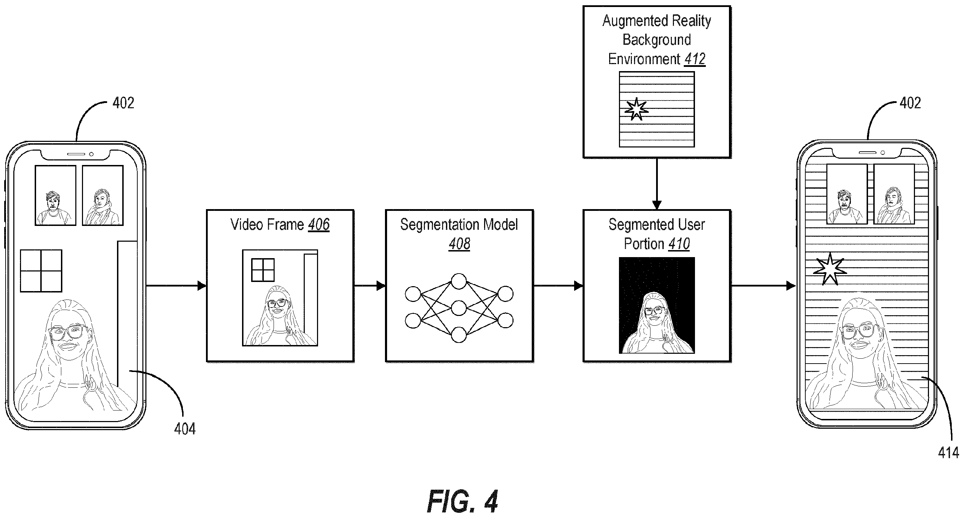

As mentioned above, the shared AR video call system 104 can enable client devices to render videos within AR background environments (that replace the background of the videos). For example, FIG. 4 illustrates the shared AR video call system 104 enabling a client device to segment a background and a foreground depicting a participant from a video to render the foreground segmented portion (e.g., a segmented user portion) within an AR background environment. Indeed, FIG. 4 illustrates a client device rendering a video within a 3D AR space.

As shown in FIG. 4, a client device 402 establishes a video call with one or more other participant devices. Indeed, as illustrated in FIG. 4, the client device 402 captures and renders a video 404 of a participant user utilizing a camera corresponding to the client device 402. Moreover, as shown in FIG. 4, the shared AR video call system 104 (e.g., via the client device 402) utilizes a segmentation model 408 with a video frame 406 (from the video 404) to generate a segmented user portion 410. Indeed, as shown in FIG. 4, the shared AR video call system 104 generates the segmented user portion 410 from the video frame 406 to segment a foreground depicting a participant user from a background of the video.

Moreover, as shown in FIG. 4, the shared AR video call system 104 can render the segmented user portion 410 of the video within a shared AR background environment. For instance, as shown in FIG. 4, the shared AR video call system 104 identifies an augmented reality background environment 412 (e.g., as an AR background texture that utilizes a cube mapping texture or a sphere mapping texture). Indeed, the augmented reality background environment 412 can include various AR background environments described herein (e.g., 360 AR background environments or other multi-view AR background environments). Then, as illustrated in FIG. 4, the shared AR video call system 104 places the segmented user portion 410 from the video frame 406 within the augmented reality background environment 412 to render a video 414 with an AR background environment.

Moreover, the shared AR video call system 104 can enable a client device to render the 3D shared AR space (i.e., the AR background environment) utilizing an AR background texture. In some embodiments, the shared AR video call system 104 can enable a client device(s) to render an AR background environment as a sphere having a texture or one or more graphical objects (e.g., a 360-degree panoramic image or graphical object) as the AR background texture. For example, a client device can render an AR background environment as a spherical graphical object (e.g., a hemisphere that includes textures or graphical objects or using sphere mapping). For instance, in one or more embodiments, the shared AR video call system 104 can enable client devices to render 3D AR (background) spaces utilizing hemisphere or semi-hemisphere texture mapping. Indeed, the client device can render various portions of the hemisphere texture mapping as an AR background environment (e.g., a 3D AR space) during the video call for different participant users and during movement of participant user devices.

In some cases, the client device can render an AR background environment utilizing cube mapping (e.g., environment mapping six sides of a cube as a map shape to project a 360-video projection or 360 graphical projection) as the AR background texture. In particular, the client device can utilize six sides of a cube as a texture map for various regions of an AR background environment (e.g., 3D AR space). Moreover, the client device can utilize a viewpoint corresponding to a client device to render a scene of the 3D AR space from each side of the cube map relative to the viewpoint.

In some embodiments, to render an AR background environment, a client device utilizes video processing data. For instance, a client device can utilize video (or image) segmentation to segment background features from a foreground (e.g., depicting a captured participant) in the video (or video frames). Then, the client device can render an AR background environment and replace the segmented background features with visual elements of the AR background environment.

In one or more embodiments, the client device (or the shared AR video call system 104) utilizes a segmentation model to segment background features from a foreground of a video. Indeed, the shared AR video call system 104 can enable a client device to utilize various approaches and/or tools to render an AR background environment that replaces a background of a video, such as, but not limited to face tracking, image masks, and/or machine learning-based segmentation models or classifiers (e.g., convolutional neural networks, generative adversarial neural networks).

For instance, the client device can utilize a segmentation model that identifies faces (or persons) depicted within video frames (e.g., face tracking). Then, the client device can utilize the segmentation model to select (or create a mask) for the pixels that correspond to the identified face (or person). Indeed, the client device can segment the pixels that correspond to the identified face (or person) and generate a layer (e.g., a segmented portion) from the pixels that correspond to the identified face (or person).

As an example, the shared AR video call system 104 can enable a client device to utilize a machine learning-based segmentation model to identify a salient foreground (representing a participant user) within a captured video. Indeed, in some cases, the client device utilizes a machine learning-based segmentation model that classifies subjects (e.g., salient objects) portrayed within a digital image or video frame. For instance, the machine learning-based segmentation model can classify pixels corresponding to a person depicted within a video as part of a salient object (e.g., a person) and label the pixels (e.g., using a masking layer, using pixel positions). Moreover, the client device can also utilize the machine learning-based segmentation model to classify pixels of a background as belonging to a background. Then, the shared AR video call system 104 can partition regions representing the salient foreground from a background of the captured video.

Furthermore, the shared AR video call system 104 can replace the background of the captured video by inserting the segmented foreground of the captured video within a rendered AR space (e.g., a 360 AR space). In some instances, the shared AR video call system 104 can enable a client device to generate a video layer from the segmented foreground depicting a participant user (e.g., a segmented user portion). Then, the client device can insert the video layer depicting the participant user as a foreground of a 3D AR space (e.g., a background AR space).

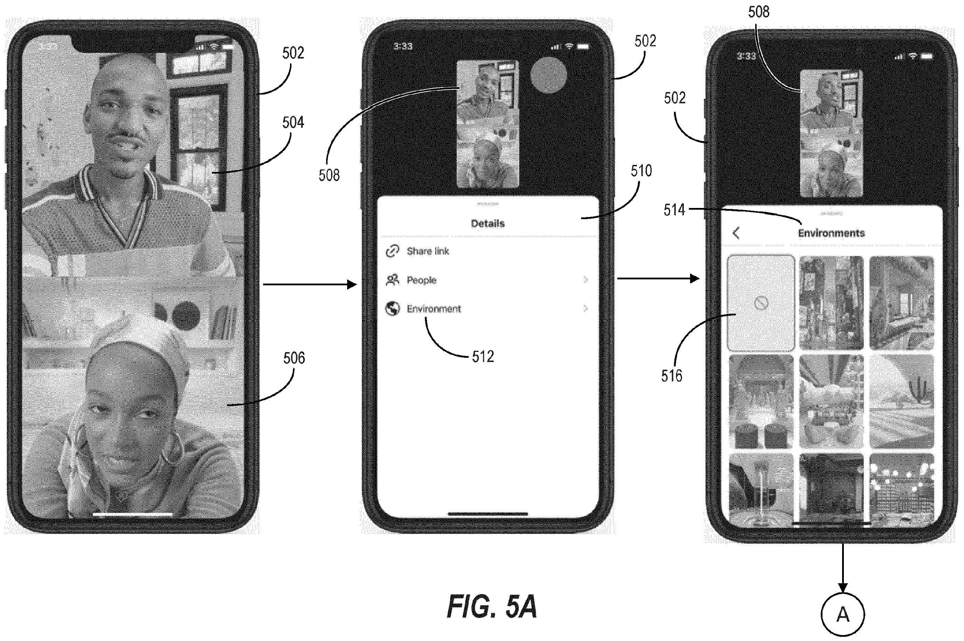

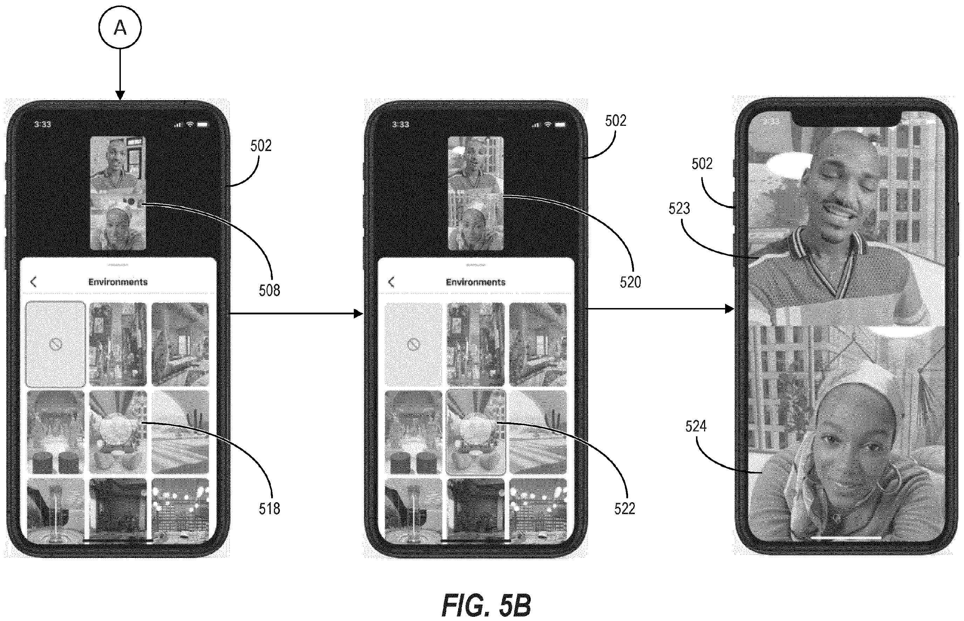

In one or more embodiments, the shared AR video call system 104 can provide, to client devices, graphical user interfaces for selectable options to enable the client devices to initiate an AR background environment (or three-dimensional (3D) shared AR space) during a video call. For example, FIG. 5A and 5B illustrate a client device initializing an AR background environment through one or more selectable options. As shown in FIG. 5A, a client device 502 establishes a video call with another participant (corresponding to another client device) to display a video stream 504 and a video stream 506. Furthermore, as illustrated in FIG. 5A, upon receiving a user interaction within the video call interface, the client device 502 can provide, for display within the video call interface, a menu interface 510 with selectable options (e.g., share link, people, environment) for the video call. Additionally, as shown in FIG. 5A, upon receiving a user interaction with the selectable option "Environment," (e.g., selectable option 512) the client device 502 can provide, for display within the video call interface, a menu interface 514 with selectable AR background environments (e.g., 360 AR background environments). As shown in FIG. 5A, the selected environment 516 indicates that a shared AR space is not selected. Accordingly, as shown in FIG. 5A, the client device 502 displays video call streams 508 with the originally captured backgrounds during the video call.

Furthermore, as shown in the transition from FIG. 5A to FIG. 5B, the client device 502 receives a selection of a particular AR background environment (or 3D shared AR space) from the selectable AR background environments 518 and renders the selected 3D shared AR space. For example, upon receiving selection of the particular 360 AR background environment 522, the client device 502 renders the particular 360 AR background environment as a background space in the video streams 520 on the client device 502 (e.g., instead of the original background of the video streams 508). Moreover, as shown in FIG. 5B, the shared AR video call system 104 also enables the other client device (of the other video call participant) to also render the particular AR background environment as a background space in a video capture on the other client device (e.g., as a shared AR background environment). For instance, as shown in FIG. 5B, the client device 502 renders a video 523 within a portion of the 3D shared AR space (corresponding to the selected AR background environment 522) and renders a video 524 (from another participant device) within another (or additional) portion of the 3D shared AR space (e.g., a shared AR background environment).

In one or more embodiments, the selectable AR background environments can include user created AR background environments (e.g., 360 AR background environments or other multi-view AR background environments). For instance, the AR background environments can include AR background environments created by application developers, businesses, or individual users (e.g., utilizing graphical assets with an API corresponding to the shared AR video call system 104). Additionally, although FIG. 5A and 5B illustrate a client device displaying a particular menu interface for the AR background environments, the client device can display various types and/or layouts of menu interfaces, such as, side scrolling selectable options, swiping AR background environments directly on the captured video, buttons with text describing the AR background environments.

In some cases, the shared AR video call system 104 enables a single participant client device to initiate an AR background environment on each client device participating on the video call. In some embodiments, when a client device initiates an AR background environment, the shared AR video call system 104 transmits (as a notification and instruction) to other participant client devices to enable the other participant client devices to notify of the initiated AR background environment and to also render the AR background environment.

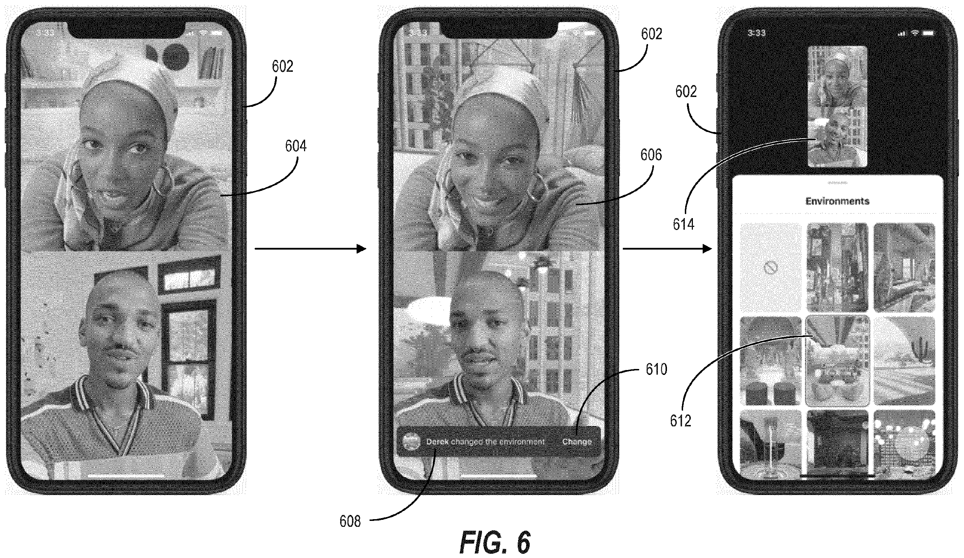

For example, in reference to FIG. 6, a client device 602 receives information indicating that another client device initiated an AR background environment (e.g., as a toast notification) while displaying a video call stream 604. Then, as shown in FIG. 6, the client device 602 displays a notification 608 indicating the initiation of the AR background environment. In addition to displaying the notification 608, as shown in FIG. 6, the client device 602 also renders the AR background environment with a video captured (e.g., as video stream 606) on the client device 602. Moreover, the other participant device also renders a video within a different portion of the AR background environment (e.g., displayed as a video stream of the other participant device within the video call).

In addition, as shown in FIG. 6, the client device 602 also provides, within the notification 608, a selectable option 610 to change the AR background environment. As shown in FIG. 6, upon receiving a selection of the selectable option 610 to change the AR background environment, the client device 602 displays, within a menu interface 612, selectable 360 AR background environments (as described above) to change the AR background environment across each participant client device on the video call (e.g., in the video cells 614).

Although FIG. 6 illustrates the client device 602 displaying a toast notification (as the notification 608), the client device can display various types of notifications to indicate the initiated AR background environment, such as, but not limited to, tray notifications, visual animated effects, and/or sound-based notifications.

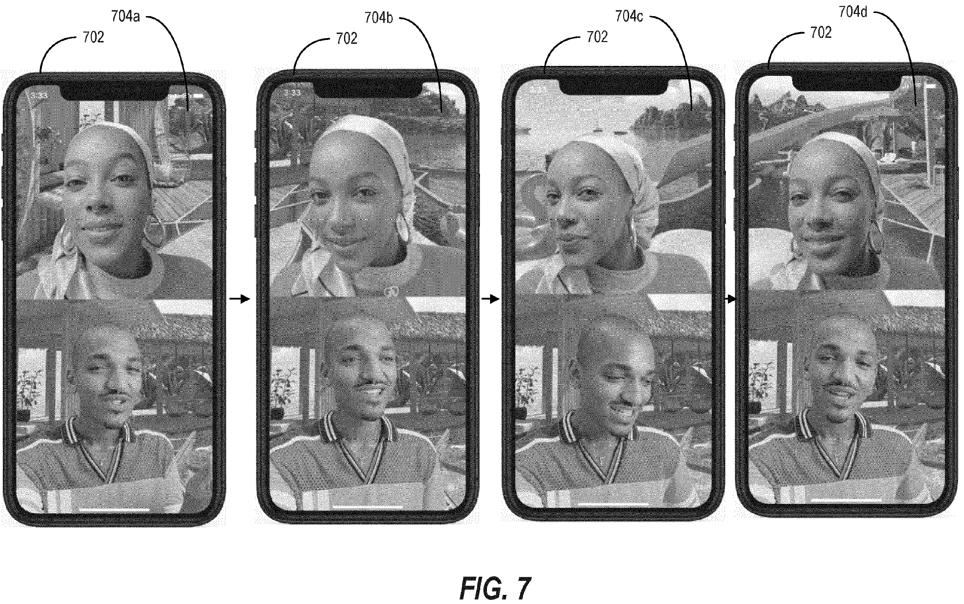

As mentioned above, the shared AR video call system 104 can enable a client device to track movement of the client device (and/or movement of a participant) and update a rendering of an AR background environment based on the tracked movement. For example, FIG. 7 illustrates a client device 702 utilizing tracked movements to update a rendering of an AR background environment during a video call. For example, as shown in FIG. 7, the client device 702 detects movement of the client device 702 (e.g., from the participant user holding the client device 702) and updates the rendering of the AR background environment to simulate a multi-degree (e.g., 360 degree) space (e.g., different portions of a beach house space). Indeed as shown in FIG. 7, the movement of the client device 702 causes the client device 702 to render a different portion of the AR background environment to simulate that the camera of the client device is facing (and capturing) a different portion of the multi-degree space (e.g., movement from a portion 704a of the shared AR space, to portions 704b, 704c, and 704d of the shared AR space).

Although FIG. 7 illustrates movement of a single client device, the shared AR video call system 104 can enable more than one participant client device on the video call to detect movement and update a corresponding rendering of an AR background environment based on the detected movement (in the respective participant client device).

Additionally, although one or more implementations herein describe utilizing a 360 AR background environment that includes a 360-degree viewing angle, the shared AR video call system 104 can enable client devices to render AR background environments having various viewing angles. For instance, the shared AR video call system 104 can enable a client device to render an AR background environment having a 180-degree viewing angle or a 270-degree viewing angle.

In some instances, the shared AR video call system 104 can enable a client device to detect movement utilizing sensors within the client device. For example, the client device can utilize motion sensors, such as gyroscopes and/or accelerometers to detect a movement and orientation of a client device. Subsequently, the client device can utilize the movement and orientation data to change a rendered AR background environment to simulate the position of the phone and the viewing angle of the capturing camera within the 360-degree space. In one or more instances, the client device can also transmit the movement and orientation data to other participant client devices (via the AR data channel) to enable other client devices to utilize the movement and orientation data to render various AR effects accurately (e.g., shadows, rendering AR effects at the correct location) and/or to accurately synchronize a shared 360 AR background environment. For example, a client device can utilize various motion sensors or other sensors to detect movement and/or orientation of the client device, such as, but not limited to a gyroscope sensor, accelerometer sensor, infrared sensor, camera, and/or inertial measurement unit (IMU) sensor.

As also previously mentioned, the shared AR video call system 104 can maintain a persistent shared 360 AR background environment between participants (or client devices of participants) in subsequent video calls. For example, the shared AR video call system 104 can save (or remember) a shared AR background environment selection and/or modifications to a shared AR background environment between participant devices. Furthermore, upon receiving or initiating a video call via a participant device with the same participant device(s), the shared AR video call system 104 can initiate the video call with the saved, shared AR background environment.

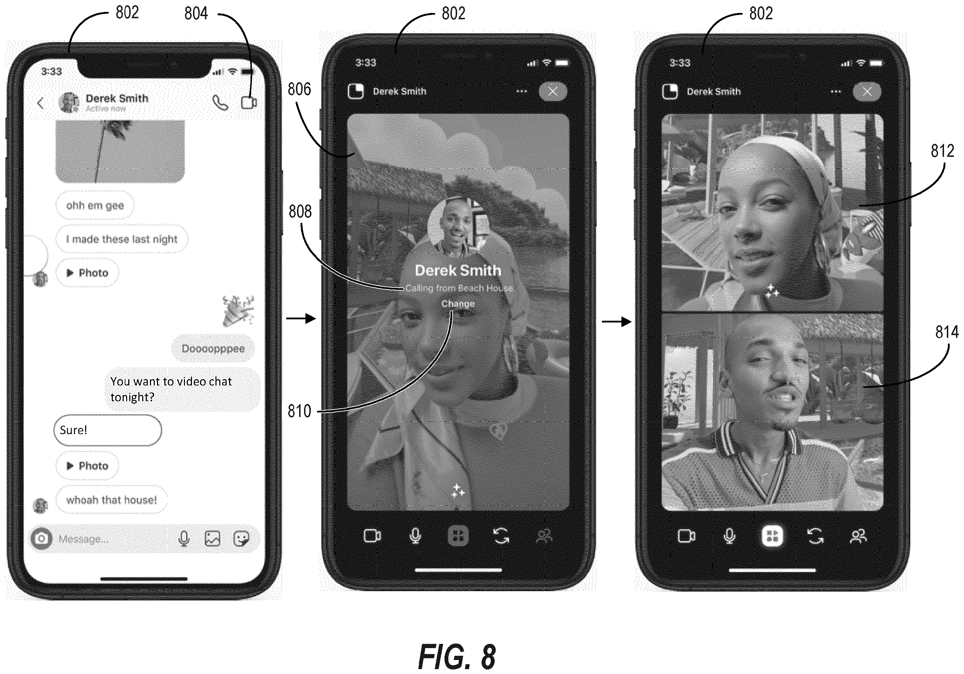

For example, FIG. 8 illustrates a client device 802 initiating a video call with a persistent shared AR background environment. As shown in FIG. 8, the client device 802 receives a user interaction with a selectable option 804 indicating a request to establish a video call with another participant. Upon initiation of the video call, the client device 802 provides, for display within a video call interface 806 (e.g., a video call initiation interface), an indication 808 that a particular AR background environment (e.g., a Beach House) is rendered (or will be rendered during the video call). Indeed, the particular AR background environment can include a persistent shared AR background environment that has been utilized in previous video calls between the participants of the video call (e.g., the participant users as shown in FIG. 8) or previously used by the client device.

As further shown in FIG. 8, the client device 802 also provides, for display within the video call interface 806, a selectable option 810 to change the persistent AR background environment. Indeed, upon receiving a selection of the selectable option 810 to change the AR background environment, the client device 802 can display, within a menu interface, selectable AR background environments (as described above) to change the AR background environment across each participant client device on the video call. In some cases, the client device 802 can provide, for display, selectable options to change AR background environments for the current video call or for each video call (e.g., changing a persistent AR background environment). In some cases, the client device 802 can provide, for display, menu options to change a persistent AR background environment during a video call waiting interface and/or during the video call.

In some embodiments, the shared AR video call system 104 (or a client device) can utilize themes from other communication mediums (e.g., a messenger application, an email application, a virtual reality space) to select a persistent AR background environment. For example, the client device can determine that a messenger communication thread between participants (or a group of participants) utilizes a particular theme (e.g., beach house, outer space, forest). The client device, upon receiving a request to establish a video call, can utilize the particular theme to initiate a video call with a shared AR background environment that corresponds to (or matches the) particular theme.

Moreover, in some cases, the shared AR video call system 104 can also maintain persistence of the AR background environment within other communication mediums. For example, the shared AR video call system 104 can generate a virtual reality space from the AR background environment (and various modifications from participant devices) when a participant user corresponding to the AR background environment joins a virtual reality space. For example, the shared AR video call system 104 can provide, for a display, a virtual reality version of the AR space in which one or more participant users can communicate via an extended-reality device.

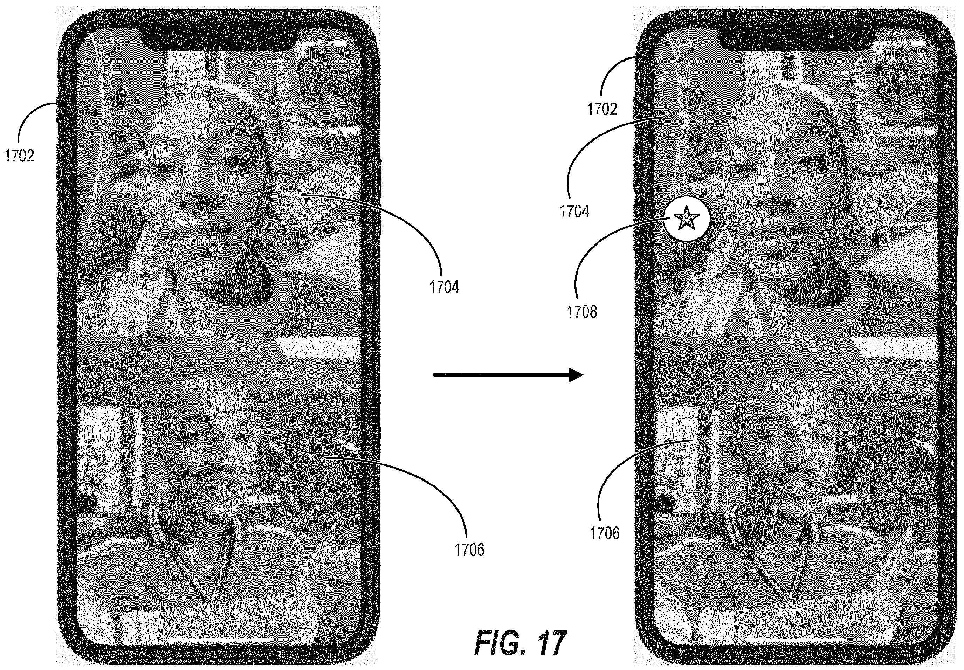

In addition, the shared AR video call system 104 can also maintain persistent AR effects, AR objects, and/or other modifications within an AR background environment. For example, the shared AR video call system 104 can save AR object placements or other modifications within (or to) the AR background environment between a particular group of participant client devices. Then, upon initiation of a video call between the particular group of participant client devices, the shared AR video call system 104 can enable the participant client devices to render the AR background environment with the saved (or persistent) with the saved AR object placements or other modifications within (or to) the AR background environment. For example, the shared AR video call system 104 can save AR effects and/or modifications to the AR background environment introduced in the AR background environment as described below (e.g., in relation to FIG. 17).

As further shown in FIG. 8, upon initiating the video call, the client device 802 renders a video of a participant user (e.g., segmented user) within a first portion 812 of a 3D shared AR space (e.g., the AR background environment from the indication 808) during the video call. In addition, the client device 802 also displays a video of another participant user within a second portion 814 of the 3D shared AR space. In one or more embodiments, the shared AR video call system 104 causes the other participant device to render the video of the other participant within the second portion 814 and transmit a video stream to the client device 802.

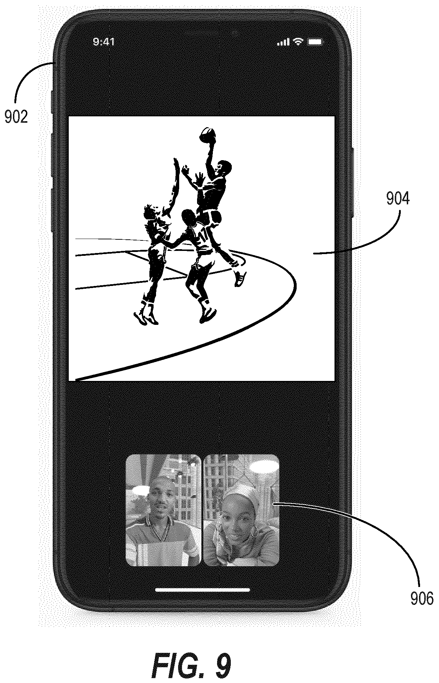

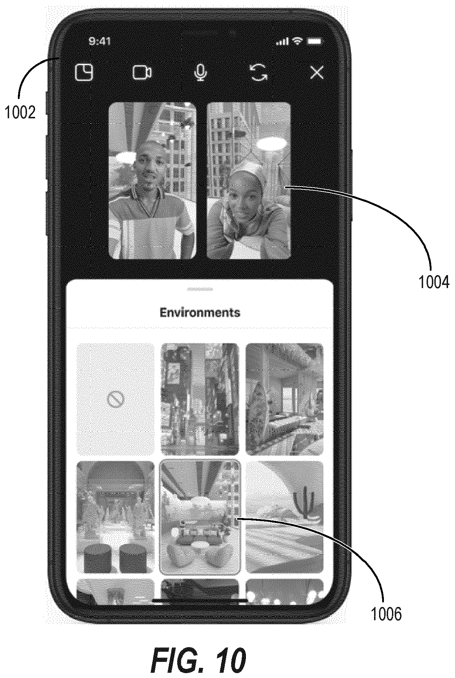

As also mentioned above, the shared AR video call system 104 can enable a client device to modify a video call interface layout while displaying participants with shared AR background environments during the video call. For instance, a client device can modify a video interface layout to facilitate various functionalities and/or presentation styles during a video call having participants portrayed in a rendered shared AR background environment. FIGS. 9 and 10 illustrate client devices modifying a video interface layout to facilitate various functionalities during the video call.

For instance, as shown in FIG. 9, a client device 902 modifies a video interface layout to facilitate and display a shared video stream that participants of the video call can watch together while also having shared AR background environments rendered in captured videos. In particular, as shown in FIG. 9, the shared AR video call system 104 enables the client devices 902 to capture and display videos 906 of participants with rendered shared AR background environments while also displaying a shared video stream 904 between the video call participant devices. For example, the participant devices can individually playback a synchronized video stream (e.g., started at the same time or tracking the same timestamps) and/or the participant devices can receive the same video stream from a third-party server (e.g., a video streaming service and/or the server device(s) 102).

In one or more embodiments, the shared AR video call system 104 facilitates various functionalities by modifying a video call interface during a rendered AR background environment. For example, the shared AR video call system 104 can facilitate functionalities, such as, but not limited to video streams, audio streams, web browsing, playable video games, eBooks, screen mirroring, digital notes, digital sketchpads, and/or menu options for the video call.

As an example, FIG. 10 illustrates the shared AR video call system 104 enabling a client device 1002 to modify a video call interface layout to facilitate a display of a menu option interface 1006 while also rendering videos 1004 with AR background environments. As shown in FIG. 10, the client device 1002 modifies a video call interface layout to display a menu option interface 1006 with selectable AR background environments while also displaying the participant videos 1004 with an AR background environment. In particular, in reference to FIG. 10, the client device can receive a selection of a selectable AR background environment and render (or change) an AR background environment (e.g., to initiate an AR background environment or change a rendered AR background environment) during the video call.

Moreover, although FIG. 10 illustrates a client device displaying a menu interface with selectable AR background environments, the shared AR video call system 104 can modify a video call interface layout to display menu interfaces to select shareable AR effects and/or to apply (or render) AR effects on a captured video. In some cases, the shared AR video call system 104 modifies a video call interface layout to display menu interfaces for options, such as options to add participants to a video call, remove participants from the video call, change audio settings, change video settings, and/or other configurations for the video call.

In addition, in some cases, the shared AR video call system 104 can also enable a client device to modify a video call interface layout to change a visual presentation of a video call. For instance, a client device can modify a video call interface layout to place videos of the participants in various stylistic settings while also rendering an AR background environment within the videos. For example, a client device can modify a video call interface layout to position videos of the video call within various stylized settings, such as bouncing bubbles or within or on different texture materials (e.g., a slime material, a metal material, a water material) while also rendering an AR background environment within the videos (in accordance with one or more implementations herein). For example, the shared AR video call system 104 can enable a client device to modify a video call interface layout as described in Blackburne et al., Rendering Customized Video Call Interfaces During a Video Call, U.S. Patent Application No. 17/663,360 (Filed May 13, 2022) (hereinafter "*Blackburne*")*.*

In some implementations, the shared AR video call system 104 also enables a client device to layer various AR effects or visual elements during a video call having an AR background environment. For example, the shared AR video call system 104 can enable a client device to render an AR background environment and also render another AR element within the AR background environment during a video call. For instance, the client device can render (or impose) an AR element on a participant depicted within a captured video in addition to rendering the AR background environment in the background. Indeed, the client device can modify a depiction of a participant captured within a video or replace the participant with a visual element within the AR background environment during the video call.

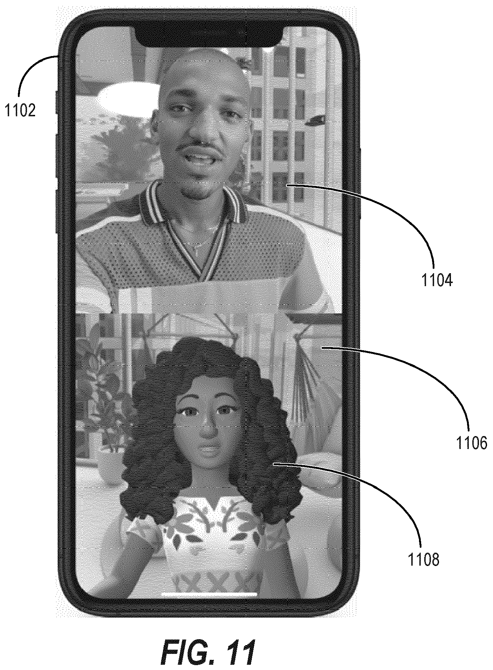

As an example, FIG. 11 illustrates the shared AR video call system 104 enabling a client device 1102 to layer an AR effect on an AR background environment video call by imposing an avatar 1108 (as an AR element) of a participant within a rendered AR background environment 1106. As shown in FIG. 11, the client device 1102 renders the avatar 1108 of the participant within the AR background environment 1106 that also mimics mannerisms and actions of the participant as captured on video during the video call. Indeed, the shared AR video call system 104 can enable a client device to render the AR background environment (as described herein) while also rendering an avatar that follows movements and actions of the captured participant in real time. Moreover, as shown in FIG. 11, the client device 1102 also displays a video of another participant device rendered within another portion of a shared AR 3D space 1104.

Additionally, although FIG. 11 illustrates a single participant (via a participant device) utilizing an avatar within a video call, the shared AR video call system 104 can enable multiple participant client devices to render avatars for corresponding participants. For example, the shared AR video call system 104 can enable various client devices to render avatars within a shared AR background environment. In some cases, multiple client devices can render avatars of participants captured on the client devices and streams captured videos of the avatars within the shared AR background environment. In one or more embodiments, the shared AR video call system 104 enables the multiple client devices to render avatars and transmit data for the avatars via an AR data channel to cause participant client devices to (natively) include (or impose) avatars as textures within a locally rendered AR background environment.

Moreover, although FIG. 11 illustrates a client device utilizing an avatar within a video call over the AR background environment, the shared AR video call system 104 can enable a client device to introduce a variety of AR effects on a participant. For example, the shared AR video call system 104 can enable a client device to render AR effects, such as, but not limited to, AR makeup, AR face cleanup, AR sunglasses, AR beards on the captured video of the participant. Indeed, the shared AR video call system 104 can enable the client device to render such AR effects on top of the AR background environment.

Indeed, in one or more embodiments, the shared AR video call system 104 can enable a client device to utilize or render various video textures from videos within AR effects (or avatars) as described in Blackburne et al., Generating Shared Augmented Reality Scenes Utilizing Video Textures from Video Streams of Video Call Participants, U.S. Patent Application No. 17/662,197 (Filed May 5, 2022) (hereinafter "*Blackburne '197*").

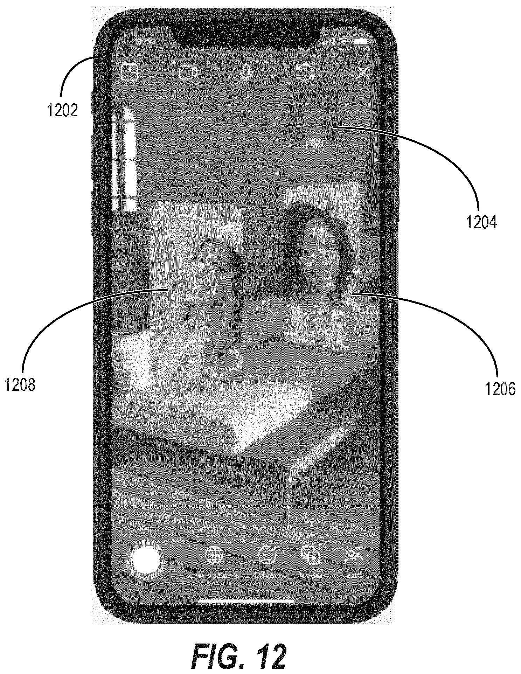

As previously mentioned, the shared AR video call system 104 can enable a client device to impose videos of participants of the video call within an AR scene or space (e.g., the participants of the video call are portrayed to be within the 360 AR scene). For instance, FIG. 12 illustrates a client device rendering an AR scene (e.g., a 360 AR background environment) and also positioning captured videos of the video call participants within the AR scene. In one or more embodiments, the shared AR video call system 104 can enable a client device to render the participants of the video call within an AR scene to simulate the perception of the participants being in the same location or room during the video call.

In some cases, the client device can render the AR scene and impose video frames of the participants within the AR scene during a video call. In particular, as shown in FIG. 12, the client device 1202 positions video frames 1206, 1208 (e.g., as video cells) that play video streams depicting the participants in preconfigured positions (e.g., spawn points) of the AR scene 1204. In one or more embodiments, the client device positions video frames that play video streams depicting the participants in random positions in the AR scene. In some cases, a client device can receive user interactions to move the video frames within the AR scene to reposition the video depiction of participants within the AR scene during the video call.

In some embodiments, the shared AR video call system 104 establishes a video call in which video call data and video processing data is transmitted between client device to enable client devices to render captured videos as video textures within AR effects in a shared AR scene of a video call. In particular, in one or more embodiments, the shared AR video call system 104 enables a client device to locally render videos of individual participants as video textures within AR effects utilizing video data and video processing data received from participant client devices. Indeed, in some embodiments, the shared AR video call system 104 enables the client device to render an AR scene in which incoming video depicting video call participants are presented as video textures that are imposed into the AR scene as AR effects.

For example, a client device can render a video texture from video data and video processing data received from a participant client device to place a face of a participant within the AR scene as an AR effect (e.g., as an animation and/or a character). In some cases, the client device can utilize a rendered video texture of a participant within a particular visual element of the AR scene (e.g., within windows, vehicles, paintings). Additionally, in some cases, the shared AR video call system 104 enables the client device to utilize movement of the client device to render the shared 3D AR space from various viewing angles to show or hide visual video textures of one or more participants that are imposed in the shared 3D AR space during the video call.

In some embodiments, the shared AR video call system 104 enables a client device to render the AR space (and video textures of the video call participants) within a self-view buffer on the client device. For example, the client device can, rather than receiving video streams and displaying video streams in a video grid view, display a single view (e.g., the self-view that captures and display a video on the client device) with AR spaces and/or video textures generated from videos of other participant devices rendered within the single view. Additionally, in some cases, the shared AR video call system 104 enables a client device to receive video processing data from other participant client devices via an AR data channel, a video processing data channel, and/or as combined video data (e.g., video data and video processing data combined using a split frame or alternating videos to include video processing data) to generate video textures (as described in *Blackburne '197*).

Furthermore, in one or more embodiments, the shared AR video call system 104 enables a client device to display other representations within a 360 AR space to represent participants without video (or with muted video). For example, in some cases, a client device can display a text window (or bubble) within a rendered AR space to display messages from a video call participant with muted video (or muted sound). In some instances, the client device can display an AR object (e.g., an AR speaker object, an AR telephone object) within the AR space to represent one or more video participants and also play audio from the one or more video participants through the AR object when the one or more video participants are unavailable via video during a video call. In some embodiments, the shared AR video call system 104 utilizes spatial audio to modify the audio of participants (with or without video) based on whether the participants are shown or hidden from an active viewing angle in the 360 AR space during the video call.

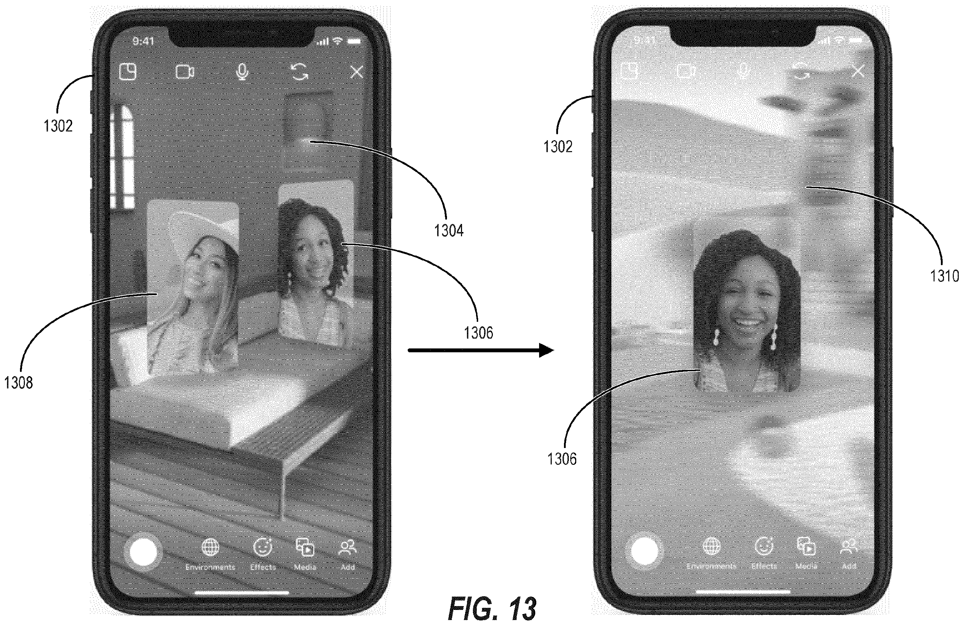

In one or more implementations, the shared AR video call system 104 can enable client devices to receive user interaction for user navigation within a rendered AR background environment (or scene). For example, FIG. 13 illustrates the shared AR video call system 104 enabling a client device 1302 to utilize user interaction to navigate a user (or participant) within a rendered AR background environment. As shown in FIG. 13, the client device 1302 receives a user interaction to navigate a video 1306 of a participant (captured on the client device) within a first portion 1304 of the AR scene (or space) by moving the video 1306 of the participant to another location 1310 within the AR scene (or space). Indeed, during the user interaction and navigation of the video 1306, the client device continues to render the video call 1308 within the first portion of the AR scene.

As an example, in some cases, the client device renders an AR space with multiple locations within the AR space. Upon receiving a user interaction from the participant, the client device can navigate the video of the participant between one or more of the locations within the AR space. In some cases, the various locations within the AR space include other videos of other participants (corresponding to other participant devices) on the video call.

In one or more implementations, the client device detects movements of the client device to navigate the video of the participant between one or more of the locations within the AR space. For example, upon detecting a client device moving to the left or right, the client device can move (or navigate) the video of the participant to another location within the AR space. In some cases, the client device can detect user interactions with a screen of the client device to navigate the video of the participant between one or more of the locations within the AR space. For instance, the client device can detect user interactions, such as swiping interactions, touch and drag interactions, tap interactions, and/or interactions with the video of the participant within the AR space.

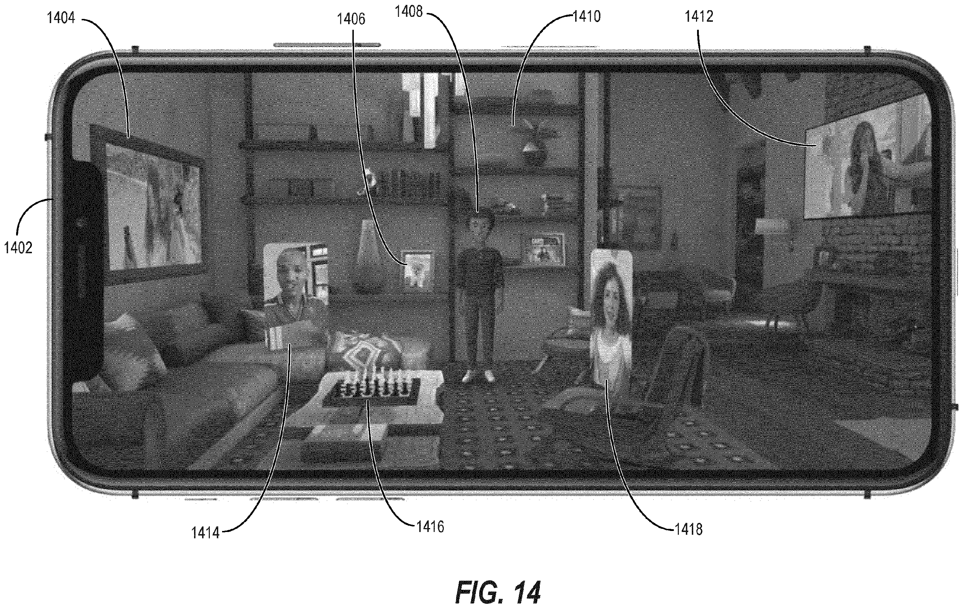

In some instances, the shared AR video call system 104 can enable a client device to render an AR space with one or more media content items and one or more representations of user participants imposed in the AR space during a video call. For example, FIG. 14 illustrates the shared AR video call system 104 enabling a client device 1402 to render a shared AR space 1410 with multiple imposed participant users of a video call. In addition, as shown in FIG. 14, the client device 1402 also renders media content within the shared AR space 1410.

Indeed, as shown in FIG. 14, the shared AR video call system 104 can cause the client device 1402 to render various participant user representations within the shared AR space 1410. For example, the client device 1402 renders video frames 1414, 1418 to depict participant users of the video call within the shared AR space 1410. Furthermore, the client device 1402 also renders another participant of the video call as an avatar 1408 within the shared AR space 1410 (as described above).

Furthermore, as shown in FIG. 14, the shared AR video call system 104 causes the client device 1402 to render media content during a video call. For example, as illustrated in FIG. 14, the client device 1402 renders images 1404, 1406 as elements within the shared AR space 1410 (e.g., digital images as portraits or posters within the shared AR space 1410). In one or more embodiments, the shared AR video call system 104 can enable a client device to render user uploaded or selected images within a shared AR space as media content (e.g., images to personalize the video call shared AR space). In some cases, the client device (or the shared AR video call system 104) can identify and render one or more images from the networking system 112 that correspond to one or more participant users of the video call. For example, the client device (or the shared AR video call system 104) can render an image portraying the one or more participant users or relevant to the one or more participant users (e.g., images from a social network feed, images relevant to interests of one or more participant users) during the video call.

As also shown in FIG. 14, the shared AR video call system 104 can enable the client device 1402 to render a shared video stream 1412 within the shared AR space 1410. Indeed, as shown in FIG. 14, the client device 1402 emulates a television within the shared AR space 1410 to render a shared video stream 1412 during the video call. For instance, the shared video stream 1412 can display videos, such as, but not limited to, movies, shows, live sport events, live news, user generated content (e.g., family videos, vacation videos), and/or videos relevant to one or more participant users of the video call.

Moreover, as shown in FIG. 14, the shared AR video call system 104 can enable the client device 1402 to render a selectable activity 1416 within the shared AR space 1410. For instance, the client device 1402 displays selectable activities (e.g., selectable activity 1416) to indicate available activities that can be initiated during the video call. As an example in FIG. 14, the client device 1402 displays a selectable chess board as the selectable activity 1416 and, upon detecting a user selection of the selectable activity 1416, the client device 1402 can initiate a chess activity (e.g., a shared video game as described above) during the video call.

In one or more embodiments, the shared AR video call system 104 can enable a client device to display various selectable activities (e.g., as widgets), such as, but not limited to video streams, audio streams (e.g., music streams, radio streams), web browsing, playable video games, eBooks, screen mirroring, digital notes (e.g., electronic documents), digital sketchpads (e.g., a shared electronic canvas, mural, or other medium within the AR space for drawing, painting, or sketching), shopping widgets (e.g., access AR renderings of products from merchant applications), and/or menu options for the video call. Furthermore, in one or more embodiments, the various activities (e.g., as widgets) can include user (or third-party) created applications for the video call AR space.

Moreover, the shared AR video call system 104 can enable a client device to generate spatial audio within a shared AR space. In particular, depending on the position of a participant user within the shared AR space (e.g., a shared AR space and/or a 3D AR background space), the client device can play spatial audio that focuses (or emphasizes) different audio sources during the video call. For example, the client device can utilize positioning relevant to the participant user in the shared AR space to emulate directional audio in an environment from multiple participant users (and/or other media content) in the shared AR space during a video call.

Moreover, the shared AR video call system 104 can enable modifications, media content, activities, or visual effects added to the AR space (and/or AR background environment) to be persistent. In particular, the shared AR video call system 104 can save the modifications, media content, activities, or visual effects such that they are maintained (and are displayed) in the AR space (and/or the AR background environment) in subsequent video calls between the same participants. In some cases, the shared AR video call system 104 can indicate or access an AR space (and/or an AR background environment) to a host participant such that the AR space (and/or the AR background environment) is persistent whenever the same host participant initiates the video call with a variety of other participant (e.g., a home AR space and/or background environment).

In some cases, the shared AR video call system 104 can enable a client device to host a video call within a virtual reality environment (e.g., an extended-reality environment). For example, the shared AR video call system 104 can enable a client device to display selectable options to access an extended-reality environment during a video call. For example, as used herein, the term "virtual environment" or "extended-reality environment" refers to a simulated environment in which users can fully or partially immerse themselves. For example, an extended-reality environment can comprise virtual reality, augmented reality, etc. An extended-reality environment can include objects and elements with which a user can interact (e.g., as an entertainment venue, as a social gathering space, as a gaming space). In general, a user participates in a virtual environment using a client device, such as a dedicated extended-reality device.

As further used herein, the term "extended-reality device" refers to a computing device having extended reality capabilities and/or features. In particular, an extended-reality device can refer to a computing device that can display an extended reality graphical user interface. An extended-reality device can further display one or more visual elements within the extended reality graphical user interface and receive user input that targets those visual elements. For example, an extended-reality device can include, but is not limited to, a virtual reality device, an augmented reality device, or a mixed reality device. In particular, an extended-reality device can comprise a head-mounted display, a smartphone, or another computing device.

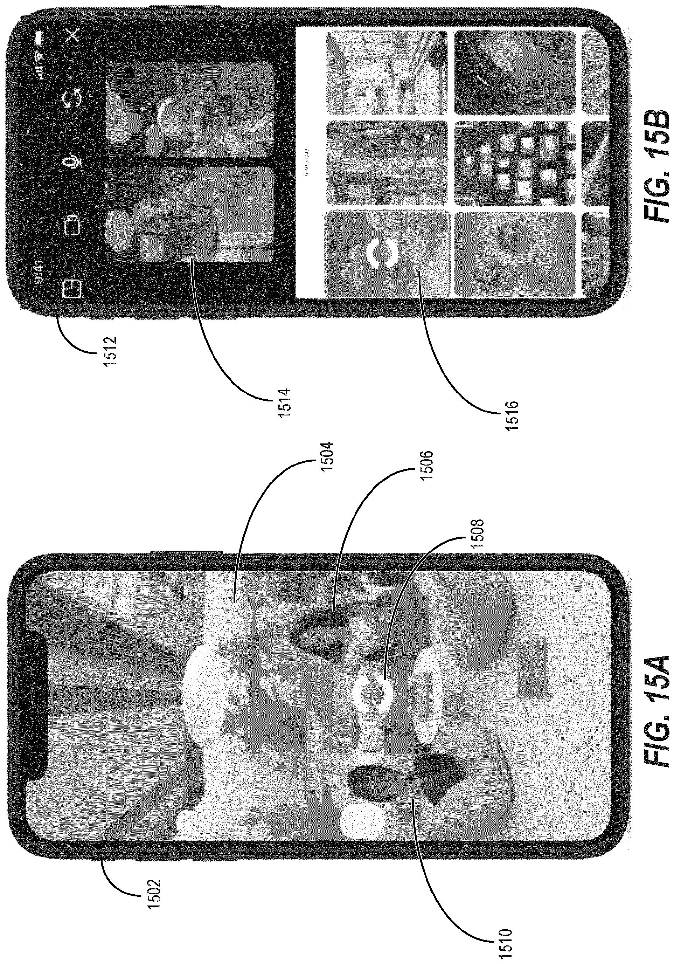

For example, FIGS. 15A and 15B illustrates the shared AR video call system 104 enabling a client device to display selectable options to access an extended-reality environment. As shown in FIG. 15A, a client device 1502 renders a shared AR space 1504 with a video frame 1506 for a first video call participant and an avatar 1510 for a second video call participant. As further shown in FIG. 15A, the client device 1502 also displays a selectable element 1508 that, upon user interaction, causes the client device 1502 to navigate the participant users of the video call to an extended-reality environment.

Moreover, as shown in FIG. 15B, a client device 1512 establishes a video call 1514. Furthermore, as shown in FIG. 15B, the client device 1512 displays a menu interface 1516 during the video call. Indeed, as shown in FIG. 15B, the client device 1512 includes selectable options to navigate to an extended-reality environment within the menu interface 1516. Upon selection of the selectable option within the menu interface 1516, the client device 1512 can render an extended-reality environment and position participant users (e.g., videos of participant users) within the extended-reality environment. Additionally, the client device can also provide selectable options to initiate (or render) shared AR spaces during a video call within a menu interface.

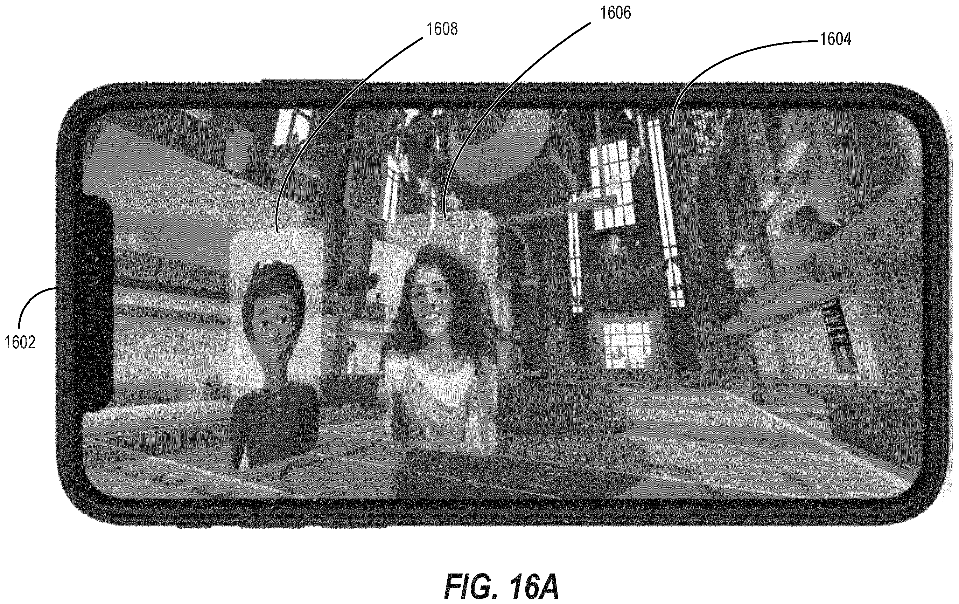

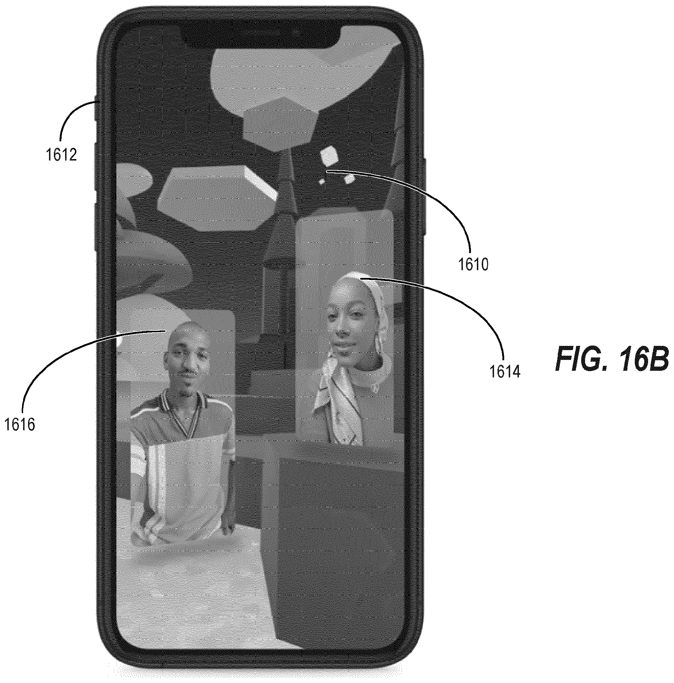

Furthermore, FIGS. 16A-16C illustrate the shared AR video call system 104 enabling a client device to render an extended-reality environment (e.g., as a 3D AR space) during a video call. For instance, as shown in FIG. 16A, the client device 1602 renders a video frame 1606 of a first participant user and an avatar 1608 of a second participant user within an extended-reality environment 1604. As shown in FIG. 16A, the client device 1602 renders the video frame 1606 and the avatar 1608 within the extended-reality environment 1604 representing a sports event. As further shown in FIG. 16B, the client device 1612 renders video frame 1616 of a first participant user and a video frame 1614 of a second participant user within an extended-reality environment 1610 representing a 3D open world space.

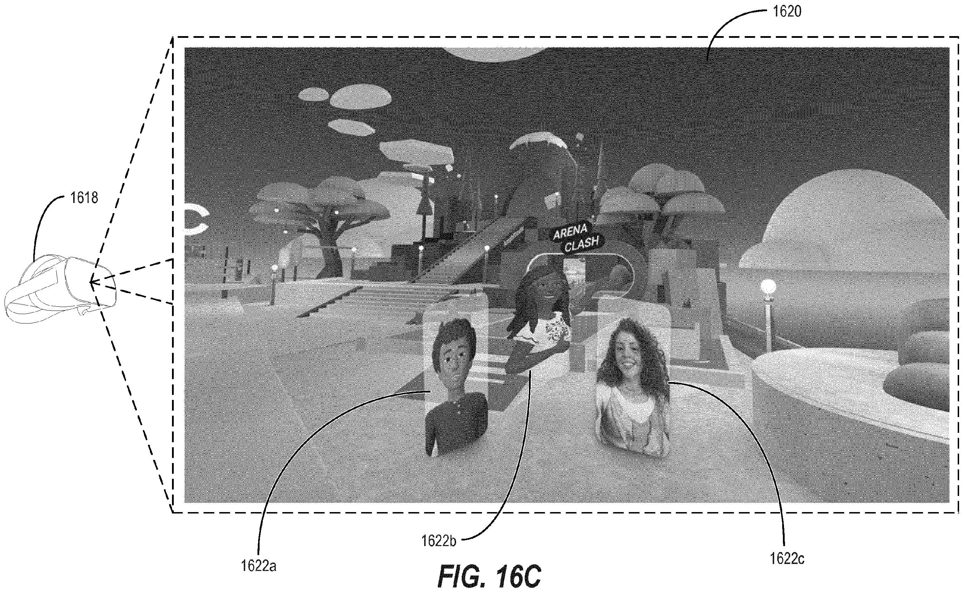

Additionally, as shown in FIG. 16C, the shared AR video call system 104 enables one or more client devices to render video streams (e.g., as video cells, avatars, and/or other AR effects) within an extended-reality environment such that other extended-reality devices (corresponding to other users) can communicate with the video streams of a video call. As shown in FIG. 16C, the extended-reality device 1618 renders an extended-reality environment 1620 during a video call in which other participant users are rendered as avatars 1622a, 1622b and a video frame 1622c. In addition, the shared AR video call system 104 can enable other participant client devices to render the participant user corresponding to the extended-reality device as an avatar and/or other representation described herein.

In one or more embodiments, the shared AR video call system 104 further enables one or more client devices to detect user interactions requesting navigation within the extended-reality environment. For instance, upon receiving user interactions to navigate a participant user within the extended-reality environment, client devices participating in the video call can render a video frame or other representation of the participant user at an updated location within the extended-reality environment. In addition, the client device corresponding to the participant user can render the extended-reality environment and the other participant devices from a point of view at the updated position of the participant user based on the navigation.

Additionally, as previously mentioned, the shared AR video call system 104 can enable a client device to receive user interactions from a participant to interact with and/or modify an AR background environment during a video call. For example, a client device can receive a user interaction to modify a 360 AR background environment (via user interactions) by inserting visual effects (or objects), such as, but not limited to paintings, drawings, writing, text, AR objects (e.g., AR furniture, AR vehicles, AR animals) within the 360 AR background environment. For instance, FIG. 17 illustrates a client device receiving a user interaction to modify an AR background environment.

As shown in FIG. 17, during a video call, a client device 1702 can receive a user interaction (e.g., a selection of an option to add an AR object, to paint, to draw) within a first portion of an AR background space 1704 during a video call with another participant user device that is rendering a second portion of an AR background space 1706. Indeed, a user interaction can include a touch or tap interaction on the screen of the client device 1702 (e.g., after selecting a visual effect or directly drawing the visual effect on the AR background environment). Upon receiving the user interaction, as shown in FIG. 17, the client device 1702 can modify a rendered first portion of the AR background space 1704 (e.g., an AR background environment) to include a visual effect 1708 introduced by the user interaction (e.g., a painting depicting a star is place on the wall depicted in the rendered 360 AR background environment).

In one or more implementations, the client device shares the added modification (or visual effect) to other participant devices on the video call (e.g., via an AR data channel) to cause the other participant devices to also render the modification (or visual effect) on rendered AR background environments on the other participant devices. Moreover, the other participant devices can render the modification (or visual effect) on the AR background environment at the same location within the AR background environment such that is viewable when the other participant devices are moved to place a camera in an orientation and direction that faces the particular location within the AR background environment. Additionally, the shared AR video call system 104 can enable each participant device to receive user interactions and modify the shared AR background environment.

Moreover, the shared AR video call system 104 can enable the modifications or visual effects added to the AR background environment to be persistent. In particular, the shared AR video call system 104 can save the modifications or visual effects such that they are maintained (and are displayed) in the AR background environment in subsequent video calls between the same participants. In some cases, the shared AR video call system 104 can indicate or access an AR background environment to a host participant such that the AR background environment is persistent whenever the same host participant initiates the video call with a variety of other participants (e.g., a home 360 AR space).

Indeed, the shared AR video call system 104 can enable client devices to receive user interactions to modify or add a variety of visual effects in an AR background environment. For example, the shared AR video call system 104 can enable a 360 AR background environment to include user added (or created) visual effects, such as, paintings, stickers, artwork, whiteboard notes, AR objects (e.g., AR furniture, AR carpets, AR plants, AR animals) via modifications and/or selections of visual effects.

Additionally, in one or more embodiments, the shared AR video call system 104 enables a client device to render various shared AR effects (as described herein) while also rendering a shared AR background environment. For example, the shared AR video call system 104 can enable a client device to render AR objects that move across participant devices of the video call via the AR data channel (as described herein). Additionally, the shared AR video call system 104 can enable client devices to receive interactions with shared AR objects to render the shared AR object similarly across client devices (as described above) while also rendering a shared AR background environment. Moreover, the shared AR video call system 104 can enable client devices to render shared AR based games between the client devices while also rendering a shared AR background environment in the background.

Furthermore, in one or more embodiments, the shared AR video call system 104 can enable audio components to a shared AR environment (or 360 AR background environment), AR effect, AR-based activity, and/or individual AR element during a video call. For example, a client device can also transmit audio information (or audio identifiers) through an AR data channel such that the client devices on a video call play audio for the AR environment, AR effect, AR-based activity, and/or individual AR element (e.g., audio related to the AR elements). In some cases, the shared AR video call system 104 can provide a library of audio data for one or more AR environments, AR effects, AR-based activities, and/or individual AR elements available during a video call between a plurality of client devices.

Additionally, in one or more embodiments, the shared AR video call system 104 generates graphical user interfaces to provide debugging tools for a shared AR video call. In particular, in some embodiments, the shared AR video call system 104 provides a selectable option to preview a shared AR effect during a video call utilizing one or more simulated video call participants. Indeed, the shared AR video call system 104 can provide selectable options to select one or more simulated video call participants (e.g., pre-recorded or AI-based video call participants that are portrayed as video call participants) for a preview video call. Additionally, the shared AR video call system 104 can provide selectable options to select a particular AR effect. Upon receiving a selection of an AR effect, the shared AR video call system 104 can provide, for display, a simulated preview of the AR effect across the one or more simulated video call participants. In some cases, the shared AR video call system 104 can also provide one or more selectable options to display AR data messages, send AR data messages, display an AR data transmission history during a simulated video call with AR effect previews.

In one or more embodiments, the shared AR video call system 104 is implemented on a computing device with various components and capabilities. One or more components of the shared AR video call system 104 can include software, hardware, or both. For instance, one or more components of the shared AR video call system 104 can include one or more instructions stored on a computer-readable storage medium and can be executable by processors of one or more computing devices, such as a client device or server device. When executed by the one or more processors, the computer-executable instructions of the shared AR video call system 104 can cause the computing device(s) to perform the methods described herein. Alternatively, the one or more components of the shared AR video call system 104 can include hardware, such as a special-purpose processing device to perform a certain function or group of functions. Alternatively, the one or more components of the shared AR video call system 104 can include a combination of computer-executable instructions and hardware.

Furthermore, the one or more components of the shared AR video call system 104 may, for example, be implemented as one or more operating systems, as one or more stand-alone applications, as one or more modules of an application, as one or more plug-ins, as one or more library functions or functions that may be called by other applications, and/or as a cloud-computing model. Thus, the one or more components of the shared AR video call system 104 may be implemented as a stand-alone application, such as a desktop or mobile application. Furthermore, the one or more components of the shared AR video call system 104 may be implemented as one or more web-based applications hosted on a remote server. Alternatively, or additionally, the one or more components of the shared AR video call system 104 may be implemented in a suite of mobile device applications or "apps."

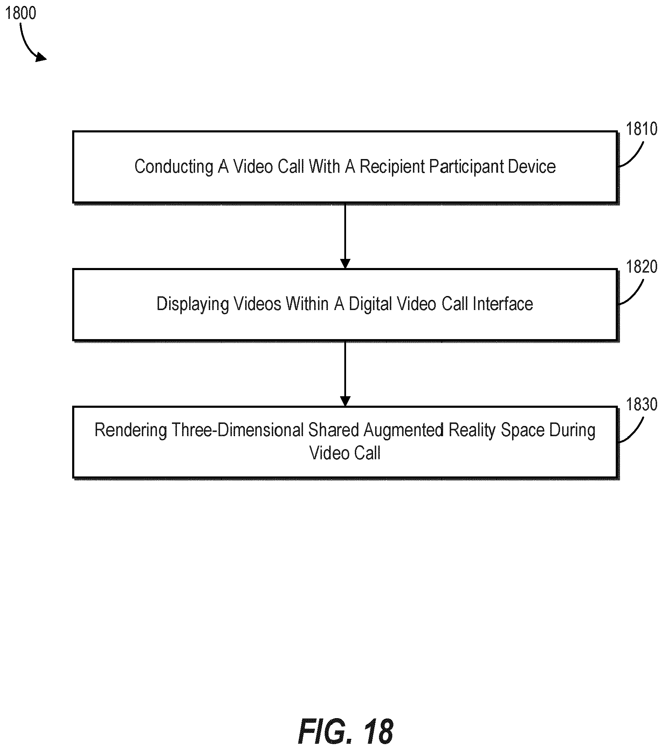

FIGS. 1-17, the corresponding text and the examples provide a number of different methods, systems, devices, and non-transitory computer-readable media of the shared AR video call system 104. In addition to the foregoing, one or more embodiments can also be described in terms of flowcharts comprising acts for accomplishing particular results, as shown in FIG. 18. FIG. 18 may be performed with more or fewer acts. Furthermore, the acts shown in FIG. 18 may be performed in different orders. Additionally, the acts described in FIG. 18 may be repeated or performed in parallel with one another or in parallel with different instances of the same or similar acts.

For example, FIG. 18 illustrates a flowchart of a series of acts 1800 for enabling video calls which facilitate shared augmented reality (AR) background environments (e.g., a three-dimensional shared augmented reality space) in accordance with one or more implementations. While FIG. 18 illustrates acts according to one or more embodiments, alternative embodiments may omit, add to, reorder, and/or modify any of the acts shown in FIG. 18. In some implementations, the acts of FIG. 18 are performed as part of a method. Alternatively, a non-transitory computer-readable medium can store instructions thereon that, when executed by at least one processor, cause a computing device to perform the acts of FIG. 18. In some embodiments, a system performs the acts of FIG. 18. For example, in one or more embodiments, a system includes at least one processor. The system can further include a non-transitory computer-readable medium comprising instructions that, when executed by the at least one processor, cause the system to perform the acts of FIG. 18.

As shown in FIG. 18, the series of acts 1800 includes an act 1810 of conducting a video call with a recipient participant device. For example, the act 1810 can include conducting, by a client device, a video call with a participant device by receiving video data through a video data channel established for the video call from the participant device. Furthermore, as shown in FIG. 18, the series of acts 1800 includes an act 1820 of displaying videos within a digital video call interface. For instance, the act 1820 can include displaying a first video captured by a client device and displaying a second video received from a participant device during a video call.

Moreover, as shown in FIG. 18, the series of acts 1800 includes an act 1830 of rendering a three-dimensional shared augmented reality space during the video call. For example, the act 1830 can include rendering, within a digital video call interface, a first video captured by a client device within a first portion of a three-dimensional (3D) shared augmented reality (AR) space. In addition, the act 1830 can include receiving AR data corresponding to a 3D shared AR space through an AR data channel from a participant device to render a first video within a first portion of a 3D shared AR space.

Additionally, the act 1830 can include rendering a first video within a first portion of a 3D shared AR space by generating an AR background texture for the 3D shared AR space and replacing a background of the first video with a portion of the AR background texture corresponding to the first portion of the 3D shared AR space. Furthermore, the act 1830 can include segmenting a user depicted within a first video from a background of a first video to generate a segmented user portion and inserting the segmented user portion of the first video into a first portion of a 3D shared AR space.

Moreover, the act 1830 can include detecting, by a client device, user movement during a video call and rendering, within a digital video call interface, a first video captured by the client device within a third portion of the 3D shared AR space based on the detected user movement. For example, user movement can include detected movement of a participant depicted within a first video or client device movement of a client device.

Furthermore, the act 1830 can include receiving, by a client device, a user interaction with a 3D shared AR space and modifying the 3D shared AR space corresponding to the first video based on the user interaction by adding an AR element to a 3D shared AR space or modifying an existing AR element within the 3D shared AR space. Additionally, the act 1830 can include transmitting, through an AR data channel, AR data corresponding to a user interaction to a participant device to cause a participant device to modify a 3D shared AR space corresponding to a second video. For example, a modification to a 3D shared AR space corresponding to a first video and corresponding to a second video can be positioned at a matching portion of the 3D shared AR space. Moreover, the act 1830 can include saving a modification to a 3D shared AR space for subsequent video calls between a client device and a participant device.

Additionally, the act 1830 can include displaying, within a digital video call interface, a second video from a participant device by rendering video data received through a video data channel, the second video portraying a second portion of the 3D shared AR space. Moreover, the act 1830 can include transmitting, through an AR data channel, AR data corresponding to a 3D shared AR space to a participant device to cause the participant device to render a second video within a second portion of a 3D shared AR space. For example, a first portion and a second portion of a 3D shared AR space can include different views of a synchronized AR environment.

Furthermore, the act 1830 can include receiving, by a client device, a selection of an additional 3D shared AR space and rendering, within a digital video call interface, a first video captured by a client device within a first portion of the additional 3D shared AR space. In some embodiments, the act 1830 includes transmitting, through an AR data channel, AR data corresponding to an additional 3D shared AR space to a participant device to cause the participant device to render a second video within a second portion of an additional 3D shared AR space.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium, (e.g., memory), and executes those instructions, thereby performing one or more processes, including one or more of the processes described herein.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed by a processor, cause a general-purpose computer, special purpose computer, or special purpose processing device to perform a certain function or group of functions. In some embodiments, computer-executable instructions are executed by a general-purpose computer to turn the general-purpose computer into a special purpose computer implementing elements of the disclosure. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the present disclosure can also be implemented in cloud computing environments. As used herein, the term "cloud computing" refers to a model for enabling on-demand network access to a shared pool of configurable computing resources. For example, cloud computing can be employed in the marketplace to offer ubiquitous and convenient on-demand access to the shared pool of configurable computing resources. The shared pool of configurable computing resources can be rapidly provisioned via virtualization and released with low management effort or service provider interaction, and then scaled accordingly.

A cloud-computing model can be composed of various characteristics such as, for example, on-demand self-service, broad network access, resource pooling, rapid elasticity, measured service, and so forth. A cloud-computing model can also expose various service models, such as, for example, Software as a Service ("SaaS"), Platform as a Service ("PaaS"), and Infrastructure as a Service ("IaaS"). A cloud-computing model can also be deployed using different deployment models such as private cloud, community cloud, public cloud, hybrid cloud, and so forth. In addition, as used herein, the term "cloud-computing environment" refers to an environment in which cloud computing is employed.

FIG. 19 illustrates a block diagram of an example computing device 1900 that may be configured to perform one or more of the processes described above. One will appreciate that one or more computing devices, such as the computing device 1900 may represent the computing devices described above (e.g., server device(s) 102 and/or a client devices 108a, 108b-108n). In one or more embodiments, the computing device 1900 may be a mobile device (e.g., a mobile telephone, a smartphone, a PDA, a tablet, a laptop, a camera, a tracker, a watch, a wearable device, a head mounted display, etc.). In some embodiments, the computing device 1900 may be a non-mobile device (e.g., a desktop computer or another type of client device). Further, the computing device 1900 may be a server device that includes cloud-based processing and storage capabilities.

As shown in FIG. 19, the computing device 1900 can include one or more processor(s) 1902, memory 1904, a storage device 1906, input/output interfaces 1908 (or "I/O interfaces 1908"), and a communication interface 1910, which may be communicatively coupled by way of a communication infrastructure (e.g., bus 1912). While the computing device 1900 is shown in FIG. 19, the components illustrated in FIG. 19 are not intended to be limiting. Additional or alternative components may be used in other embodiments. Furthermore, in certain embodiments, the computing device 1900 includes fewer components than those shown in FIG. 19. Components of the computing device 1900 shown in FIG. 19 will now be described in additional detail.

In particular embodiments, the processor(s) 1902 includes hardware for executing instructions, such as those making up a computer program. As an example, and not by way of limitation, to execute instructions, the processor(s) 1902 may retrieve (or fetch) the instructions from an internal register, an internal cache, memory 1904, or a storage device 1906 and decode and execute them.

The computing device 1900 includes memory 1904, which is coupled to the processor(s) 1902. The memory 1904 may be used for storing data, metadata, and programs for execution by the processor(s). The memory 1904 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 1904 may be internal or distributed memory.

The computing device 1900 includes a storage device 1906 includes storage for storing data or instructions. As an example, and not by way of limitation, the storage device 1906 can include a non-transitory storage medium described above. The storage device 1906 may include a hard disk drive (HDD), flash memory, a Universal Serial Bus (USB) drive or a combination these or other storage devices.

As shown, the computing device 1900 includes one or more I/O interfaces 1908, which are provided to allow a user to provide input to (such as user strokes), receive output from, and otherwise transfer data to and from the computing device 1900. These I/O interfaces 1908 may include a mouse, keypad or a keyboard, a touch screen, camera, optical scanner, network interface, modem, other known I/O devices or a combination of such I/O interfaces 1908. The touch screen may be activated with a stylus or a finger.

The I/O interfaces 1908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O interfaces 1908 are configured to provide graphical data to a display for presentation to a user. The graphical data may be representative of one or more graphical user interfaces and/or any other graphical content as may serve a particular implementation.

The computing device 1900 can further include a communication interface 1910. The communication interface 1910 can include hardware, software, or both. The communication interface 1910 provides one or more interfaces for communication (such as, for example, packet-based communication) between the computing device and one or more other computing devices or one or more networks. As an example, and not by way of limitation, communication interface 1910 may include a network interface controller (NIC) or network adapter for communicating with an Ethernet or other wire-based network or a wireless NIC (WNIC) or wireless adapter for communicating with a wireless network, such as a WI-FI. The computing device 1900 can further include a bus 1912. The bus 1912 can include hardware, software, or both that connects components of computing device 1900 to each other. As an example, the bus 1912 may include one or more types of buses.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

As mentioned above, the communications system can be included in a social networking system. A social networking system may enable its users (such as persons or organizations) to interact with the system and with each other. The social networking system may, with input from a user, create and store in the social networking system a user profile associated with the user. As described above, the user profile may include demographic information, communication channel information, and information on personal interests of the user.

In more detail, user profile information may include, for example, biographic information, demographic information, behavioral information, the social information, or other types of descriptive information, such as work experience, educational history, hobbies or preferences, interests, affinities, or location. Interest information may include interests related to one or more categories, which may be general or specific. As an example, if a user "likes" an article about a brand of shoes, the category may be the brand.

The social networking system may also, with input from a user, create and store a record of relationships of the user with other users of the social networking system, as well as provide services (e.g., wall posts, photo-sharing, online calendars and event organization, messaging, games, or advertisements) to facilitate social interaction between or among users. Also, the social networking system may allow users to post photographs and other multimedia content items to a user's profile page (typically known as "wall posts" or "timeline posts") or in a photo album, both of which may be accessible to other users of the social networking system depending on the user's configured privacy settings. Herein, the term "friend" may refer to any other user of the social networking system with which a user has formed a connection, association, or relationship via the social networking system.

FIG. 20 illustrates an example network environment 2000 of a social networking system. Network environment 2000 includes a client device 2006, a networking system 2002 (e.g., a social networking system and/or an electronic messaging system), and a third-party system 2008 connected to each other by a network 2004. Although FIG. 20 illustrates a particular arrangement of client device 2006, networking system 2002, third-party system 2008, and network 2004, this disclosure contemplates any suitable arrangement of client device 2006, networking system 2002, third-party system 2008, and network 2004. As an example and not by way of limitation, two or more of client device 2006, networking system 2002, and third-party system 2008 may be connected to each other directly, bypassing network 2004. As another example, two or more of client device 2006, networking system 2002, and third-party system 2008 may be physically or logically co-located with each other in whole or in part. Moreover, although FIG. 20 illustrates a particular number of client devices 2006, networking systems 2002, third-party systems 2008, and networks 2004, this disclosure contemplates any suitable number of client devices 2006, networking systems 2002, third-party systems 2008, and networks 2004. As an example and not by way of limitation, network environment 2100 may include multiple client device 2006, networking systems 2002, third-party systems 2008, and networks 2004.

This disclosure contemplates any suitable network 2004. As an example and not by way of limitation, one or more portions of network 2004 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 2004 may include one or more networks 2004.

Links may connect client device 2006, networking system 2002, and third-party system 2008 to communication network 2004 or to each other. This disclosure contemplates any suitable links. In particular embodiments, one or more links include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link, or a combination of two or more such links. Links need not necessarily be the same throughout network environment 2100. One or more first links may differ in one or more respects from one or more second links.

In particular embodiments, client device 2006 may be an electronic device including hardware, software, or embedded logic components or a combination of two or more such components and capable of carrying out the appropriate functionalities implemented or supported by client device 2006. As an example and not by way of limitation, a client device 2006 may include a computer system such as an augmented reality display device, a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client devices 2006. A client device 2006 may enable a network user at client device 2006 to access network 2004. A client device 2006 may enable its user to communicate with other users at other client devices 2006.

In particular embodiments, client device 2006 may include a web browser, and may have one or more add-ons, plug-ins, or other extensions. A user at client device 2006 may enter a Uniform Resource Locator (URL) or other address directing the web browser to a particular server (such as server, or a server associated with a third-party system 2008), and the web browser may generate a Hyper Text Transfer Protocol (HTTP) request and communicate the HTTP request to server. The server may accept the HTTP request and communicate to client device 2006 one or more Hyper Text Markup Language (HTML) files responsive to the HTTP request. Client device 2006 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, networking system 2002 may be a network-addressable computing system that can host an online social network. Networking system 2002 may generate, store, receive, and send social-networking data, such as, for example, user-profile data, concept-profile data, social-graph information, or other suitable data related to the online social network. Networking system 2002 may be accessed by the other components of network environment 2100 either directly or via network 2004. In particular embodiments, networking system 2002 may include one or more servers. Each server may be a unitary server or a distributed server spanning multiple computers or multiple datacenters. Servers may be of various types, such as, for example and without limitation, web server, news server, mail server, message server, advertising server, file server, application server, exchange server, database server, proxy server, another server suitable for performing functions or processes described herein, or any combination thereof. In particular embodiments, each server may include hardware, software, or embedded logic components or a combination of two or more such components for carrying out the appropriate functionalities implemented or supported by server. In particular embodiments, networking system 2002 may include one or more data stores. Data stores may be used to store various types of information. In particular embodiments, the information stored in data stores may be organized according to specific data structures. In particular embodiments, each data store may be a relational, columnar, correlation, or other suitable database. Although this disclosure describes or illustrates particular types of databases, this disclosure contemplates any suitable types of databases. Particular embodiments may provide interfaces that enable a client device 2006, a networking system 2002, or a third-party system 2008 to manage, retrieve, modify, add, or delete, the information stored in data store.

In particular embodiments, networking system 2002 may store one or more social graphs in one or more data stores. In particular embodiments, a social graph may include multiple nodes-which may include multiple user nodes (each corresponding to a particular user) or multiple concept nodes (each corresponding to a particular concept)-and multiple edges connecting the nodes. Networking system 2002 may provide users of the online social network the ability to communicate and interact with other users. In particular embodiments, users may join the online social network via networking system 2002 and then add connections (e.g., relationships) to a number of other users of networking system 2002 that they want to be connected to. Herein, the term "friend" may refer to any other user of networking system 2002 with whom a user has formed a connection, association, or relationship via networking system 2002.

In particular embodiments, networking system 2002 may provide users with the ability to take actions on various types of items or objects, supported by networking system 2002. As an example and not by way of limitation, the items and objects may include groups or social networks to which users of networking system 2002 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in networking system 2002 or by an external system of third-party system 2008, which is separate from networking system 2002 and coupled to networking system 2002 via a network 2004.

In particular embodiments, networking system 2002 may be capable of linking a variety of entities. As an example and not by way of limitation, networking system 2002 may enable users to interact with each other as well as receive content from third-party systems 2008 or other entities, or to allow users to interact with these entities through an application programming interfaces (API) or other communication channels.

In particular embodiments, a third-party system 2008 may include one or more types of servers, one or more data stores, one or more interfaces, including but not limited to APIs, one or more web services, one or more content sources, one or more networks, or any other suitable components, e.g., that servers may communicate with. A third-party system 2008 may be operated by a different entity from an entity operating networking system 2002. In particular embodiments, however, networking system 2002 and third-party systems 2008 may operate in conjunction with each other to provide social-networking services to users of networking system 2002 or third-party systems 2008. In this sense, networking system 2002 may provide a platform, or backbone, which other systems, such as third-party systems 2008, may use to provide social-networking services and functionality to users across the Internet.

In particular embodiments, a third-party system 2008 may include a third-party content object provider. A third-party content object provider may include one or more sources of content objects, which may be communicated to a client device 2006. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, networking system 2002 also includes user-generated content objects, which may enhance a user's interactions with networking system 2002. User-generated content may include anything a user can add, upload, send, or "post" to networking system 2002. As an example and not by way of limitation, a user communicates posts to networking system 2002 from a client device 2006. Posts may include data such as status updates or other textual data, location information, photos, videos, links, music or other similar data or media. Content may also be added to networking system 2002 by a third-party through a "communication channel," such as a newsfeed or stream.

In particular embodiments, networking system 2002 may include a variety of servers, sub-systems, programs, modules, logs, and data stores. In particular embodiments, networking system 2002 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Networking system 2002 may also include suitable components such as network interfaces, security mechanisms, load balancers, failover servers, management-and-network-operations consoles, other suitable components, or any suitable combination thereof. In particular embodiments, networking system 2002 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking networking system 2002 to one or more client devices 2006 or one or more third-party system 2008 via network 2004. The web server may include a mail server or other messaging functionality for receiving and routing messages between networking system 2002 and one or more client devices 2006. An API-request server may allow a third-party system 2008 to access information from networking system 2002 by calling one or more APIs. An action logger may be used to receive communications from a web server about a user's actions on or off networking system 2002. In conjunction with the action log, a third-party-content-object log may be maintained of user exposures to third-party-content objects. A notification controller may provide information regarding content objects to a client device 2006. Information may be pushed to a client device 2006 as notifications, or information may be pulled from client device 2006 responsive to a request received from client device 2006.

Authorization servers may be used to enforce one or more privacy settings of the users of networking system 2002. A privacy setting of a user determines how particular information associated with a user can be shared. The authorization server may allow users to opt in to or opt out of having their actions logged by networking system 2002 or shared with other systems (e.g., third-party system 2008), such as, for example, by setting appropriate privacy settings. Third-party-content-object stores may be used to store content objects received from third parties, such as a third-party system 2008. Location stores may be used for storing location information received from client devices 2006 associated with users. Advertisement-pricing modules may combine social information, the current time, location information, or other suitable information to provide relevant advertisements, in the form of notifications, to a user.

FIG. 21 illustrates example social graph 2100. In particular embodiments, networking system 2002 may store one or more social graphs 2100 in one or more data stores. In particular embodiments, social graph 2100 may include multiple nodes-which may include multiple user nodes 2102 or multiple concept nodes 2104-and multiple edges 2106 connecting the nodes. Example social graph 2100 illustrated in FIG. 21 is shown, for didactic purposes, in a two-dimensional visual map representation. In particular embodiments, a networking system 2002, client device 2006, or third-party system 2008 may access social graph 2100 and related social-graph information for suitable applications. The nodes and edges of social graph 2100 may be stored as data objects, for example, in a data store (such as a social-graph database). Such a data store may include one or more searchable or query able indexes of nodes or edges of social graph 2100.

In particular embodiments, a user node 2102 may correspond to a user of networking system 2002. As an example and not by way of limitation, a user may be an individual (human user), an entity (e.g., an enterprise, business, or third-party application), or a group (e.g., of individuals or entities) that interacts or communicates with or over networking system 2002. In particular embodiments, when a user registers for an account with networking system 2002, networking system 2002 may create a user node 2102 corresponding to the user, and store the user node 2102 in one or more data stores. Users and user nodes 2102 described herein may, where appropriate, refer to registered users and user nodes 2102 associated with registered users. In addition or as an alternative, users and user nodes 2102 described herein may, where appropriate, refer to users that have not registered with networking system 2002. In particular embodiments, a user node 2102 may be associated with information provided by a user or information gathered by various systems, including networking system 2002. As an example and not by way of limitation, a user may provide his or her name, profile picture, contact information, birth date, sex, marital status, family status, employment, education background, preferences, interests, or other demographic information. In particular embodiments, a user node 2102 may be associated with one or more data objects corresponding to information associated with a user. In particular embodiments, a user node 2102 may correspond to one or more webpages.

In particular embodiments, a concept node 2104 may correspond to a concept. As an example and not by way of limitation, a concept may correspond to a place (such as, for example, a movie theater, restaurant, landmark, or city); a website (such as, for example, a website associated with networking system 2002 or a third-party website associated with a web-application server); an entity (such as, for example, a person, business, group, sports team, or celebrity); a resource (such as, for example, an audio file, video file, digital photo, text file, structured document, or application) which may be located within networking system 2002 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 2104 may be associated with information of a concept provided by a user or information gathered by various systems, including networking system 2002. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 2104 may be associated with one or more data objects corresponding to information associated with concept node 2104. In particular embodiments, a concept node 2104 may correspond to one or more webpages.

In particular embodiments, a node in social graph 2100 may represent or be represented by a webpage (which may be referred to as a "profile page"). Profile pages may be hosted by or accessible to networking system 2002. Profile pages may also be hosted on third-party websites associated with a third-party system 2008. As an example and not by way of limitation, a profile page corresponding to a particular external webpage may be the particular external webpage and the profile page may correspond to a particular concept node 2104. Profile pages may be viewable by all or a selected subset of other users. As an example and not by way of limitation, a user node 2102 may have a corresponding user-profile page in which the corresponding user may add content, make declarations, or otherwise express himself or herself. As another example and not by way of limitation, a concept node 2104 may have a corresponding concept-profile page in which one or more users may add content, make declarations, or express themselves, particularly in relation to the concept corresponding to concept node 2104.

In particular embodiments, a concept node 2104 may represent a third-party webpage or resource hosted by a third-party system 2008. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client device 2006 to send to networking system 2002 a message indicating the user's action. In response to the message, networking system 2002 may create an edge (e.g., an "eat" edge) between a user node 2102 corresponding to the user and a concept node 2104 corresponding to the third-party webpage or resource and store edge 2106 in one or more data stores.

In particular embodiments, a pair of nodes in social graph 2100 may be connected to each other by one or more edges 2106. An edge 2106 connecting a pair of nodes may represent a relationship between the pair of nodes. In particular embodiments, an edge 2106 may include or represent one or more data objects or attributes corresponding to the relationship between a pair of nodes. As an example and not by way of limitation, a first user may indicate that a second user is a "friend" of the first user. In response to this indication, networking system 2002 may send a "friend request" to the second user. If the second user confirms the "friend request," networking system 2002 may create an edge 2106 connecting the first user's user node 2102 to the second user's user node 2102 in social graph 2100 and store edge 2106 as social-graph information in one or more of data stores. In the example of FIG. 21, social graph 2100 includes an edge 2106 indicating a friend relation between user nodes 2102 of user "A" and user "B" and an edge indicating a friend relation between user nodes 2102 of user "C" and user "B." Although this disclosure describes or illustrates particular edges 2106 with particular attributes connecting particular user nodes 2102, this disclosure contemplates any suitable edges 2106 with any suitable attributes connecting user nodes 2102. As an example and not by way of limitation, an edge 2106 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 2100 by one or more edges 2106.

In particular embodiments, an edge 2106 between a user node 2102 and a concept node 2104 may represent a particular action or activity performed by a user associated with user node 2102 toward a concept associated with a concept node 2104. As an example and not by way of limitation, as illustrated in FIG. 21, a user may "like," "attended," "played," "listened," "cooked," "worked at," or "watched" a concept, each of which may correspond to an edge type or subtype. A concept-profile page corresponding to a concept node 2104 may include, for example, a selectable "check in" icon (such as, for example, a clickable "check in" icon) or a selectable "add to favorites" icon. Similarly, after a user clicks these icons, networking system 2002 may create a "favorite" edge or a "check in" edge in response to a user's action corresponding to a respective action. As another example and not by way of limitation, a user (user "C") may listen to a particular song ("Ramble On") using a particular application (MUSIC, which is an online music application). In this case, networking system 2002 may create a "listened" edge 2106 and a "used" edge (as illustrated in FIG. 21) between user nodes 2102 corresponding to the user and concept nodes 2104 corresponding to the song and application to indicate that the user listened to the song and used the application. Moreover, networking system 2002 may create a "played" edge 2106 (as illustrated in FIG. 21) between concept nodes 2104 corresponding to the song and the application to indicate that the particular song was played by the particular application. In this case, "played" edge 2106 corresponds to an action performed by an external application (MUSIC) on an external audio file (the song "Song Title"). Although this disclosure describes particular edges 2106 with particular attributes connecting user nodes 2102 and concept nodes 2104, this disclosure contemplates any suitable edges 2106 with any suitable attributes connecting user nodes 2102 and concept nodes 2104. Moreover, although this disclosure describes edges between a user node 2102 and a concept node 2104 representing a single relationship, this disclosure contemplates edges between a user node 2102 and a concept node 2104 representing one or more relationships. As an example and not by way of limitation, an edge 2106 may represent both that a user likes and has used at a particular concept. Alternatively, another edge 2106 may represent each type of relationship (or multiples of a single relationship) between a user node 2102 and a concept node 2104 (as illustrated in FIG. 21 between user node 2102 for user "E" and concept node 2104 for "MUSIC").

In particular embodiments, networking system 2002 may create an edge 2106 between a user node 2102 and a concept node 2104 in social graph 2100. As an example and not by way of limitation, a user viewing a concept-profile page (such as, for example, by using a web browser or a special-purpose application hosted by the user's client device 2006) may indicate that he or she likes the concept represented by the concept node 2104 by clicking or selecting a "Like" icon, which may cause the user's client device 2006 to send to networking system 2002 a message indicating the user's liking of the concept associated with the concept-profile page. In response to the message, networking system 2002 may create an edge 2106 between user node 2102 associated with the user and concept node 2104, as illustrated by "like" edge 2106 between the user and concept node 2104. In particular embodiments, networking system 2002 may store an edge 2106 in one or more data stores. In particular embodiments, an edge 2106 may be automatically formed by networking system 2002 in response to a particular user action. As an example and not by way of limitation, if a first user uploads a picture, watches a movie, or listens to a song, an edge 2106 may be formed between user node 2102 corresponding to the first user and concept nodes 2104 corresponding to those concepts. Although this disclosure describes forming particular edges 2106 in particular manners, this disclosure contemplates forming any suitable edges 2106 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more webpages, in one or more e-mails, or in connection with search results requested by a user. In addition or as an alternative, an advertisement may be one or more sponsored stories (e.g., a news-feed or ticker item on networking system 2002). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results page, where sponsored content is promoted over non-sponsored content.

In particular embodiments, an advertisement may be requested for display within social-networking-system webpages, third-party webpages, or other pages. An advertisement may be displayed in a dedicated portion of a page, such as in a banner area at the top of the page, in a column at the side of the page, in a GUI of the page, in a pop-up window, in a dropdown menu, in an input field of the page, over the top of content of the page, or elsewhere with respect to the page. In addition or as an alternative, an advertisement may be displayed within an application. An advertisement may be displayed within dedicated pages, requiring the user to interact with or watch the advertisement before the user may access a page or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, networking system 2002 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through networking system 2002) or RSVP (e.g., through networking system 2002) to an event associated with the advertisement. In addition or as an alternative, an advertisement may include social-networking-system context directed to the user. As an example and not by way of limitation, an advertisement may display information about a friend of the user within networking system 2002 who has taken an action associated with the subject matter of the advertisement.

In particular embodiments, networking system 2002 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 2008 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, networking system 2002 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part based on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, networking system 2002 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the networking system 2002 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, networking system 2002 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, networking system 2002 may calculate a coefficient based on a user's actions. Networking system 2002 may monitor such actions on the online social network, on a third-party system 2008, on other suitable systems, or any combination thereof. Any suitable type of user actions may be tracked or monitored. Typical user actions include viewing profile pages, creating or posting content, interacting with content, joining groups, listing and confirming attendance at events, checking-in at locations, liking particular pages, creating pages, and performing other tasks that facilitate social action. In particular embodiments, networking system 2002 may calculate a coefficient based on the user's actions with particular types of content. The content may be associated with the online social network, a third-party system 2008, or another suitable system. The content may include users, profile pages, posts, news stories, headlines, instant messages, chat room conversations, emails, advertisements, pictures, video, music, other suitable objects, or any combination thereof. Networking system 2002 may analyze a user's actions to determine whether one or more of the actions indicate an affinity for subject matter, content, other users, and so forth. As an example and not by way of limitation, if a user may make frequently posts content related to "coffee" or variants thereof, networking system 2002 may determine the user has a high coefficient with respect to the concept "coffee." Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, networking system 2002 may calculate a coefficient based on the type of relationship between particular objects. Referencing the social graph 2100, networking system 2002 may analyze the number and/or type of edges 2106 connecting particular user nodes 2102 and concept nodes 2104 when calculating a coefficient. As an example and not by way of limitation, user nodes 2102 that are connected by a spouse-type edge (representing that the two users are married) may be assigned a higher coefficient than a user node 2102 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, networking system 2002 may determine that the user has a higher coefficient with respect to the first photo than the second photo because having a tagged-in-type relationship with content may be assigned a higher weight and/or rating than having a like-type relationship with content. In particular embodiments, networking system 2002 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, networking system 2002 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 2100. As an example and not by way of limitation, social-graph entities that are closer in the social graph 2100 (i.e., fewer degrees of separation) may have a higher coefficient than entities that are further apart in the social graph 2100.

In particular embodiments, networking system 2002 may calculate a coefficient based on location information. Objects that are geographically closer to each other may be considered to be more related, or of more interest, to each other than more distant objects. In particular embodiments, the coefficient of a user towards a particular object may be based on the proximity of the object's location to a current location associated with the user (or the location of a client device 2006 of the user). A first user may be more interested in other users or concepts that are closer to the first user. As an example and not by way of limitation, if a user is one mile from an airport and two miles from a gas station, networking system 2002 may determine that the user has a higher coefficient for the airport than the gas station based on the proximity of the airport to the user.

In particular embodiments, networking system 2002 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, networking system 2002 may provide information that is relevant to user's interests and current circumstances, increasing the likelihood that they will find such information of interest. In particular embodiments, networking system 2002 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, networking system 2002 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, networking system 2002 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 2008 (e.g., via an API or other communication channel), or from another suitable system. In response to the request, networking system 2002 may calculate the coefficient (or access the coefficient information if it has previously been calculated and stored). In particular embodiments, networking system 2002 may measure an affinity with respect to a particular process. Different processes (both internal and external to the online social network) may request a coefficient for a particular object or set of objects. Networking system 2002 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, field 01 October 2012.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 2104 corresponding to a particular photo may have a privacy setting specifying that the photo may only be accessed by users tagged in the photo and their friends. In particular embodiments, privacy settings may allow users to opt in or opt out of having their actions logged by networking system 2002 or shared with other systems (e.g., third-party system 2008). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 2008, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers may be authorization/privacy servers for enforcing privacy settings. In response to a request from a user (or other entity) for a particular object stored in a data store, networking system 2002 may send a request to the data store for the object. The request may identify the user associated with the request and may only be sent to the user (or a client device 2006 of the user) if the authorization server determines that the user is authorized to access the object based on the privacy settings associated with the object. If the requesting user is not authorized to access the object, the authorization server may prevent the requested object from being retrieved from the data store, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

The foregoing specification is described with reference to specific exemplary embodiments thereof. Various embodiments and aspects of the disclosure are described with reference to details discussed herein, and the accompanying drawings illustrate the various embodiments. The description above and drawings are illustrative and are not to be construed as limiting. Numerous specific details are described to provide a thorough understanding of various embodiments.

The additional or alternative embodiments may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A computer-implemented method comprising:
conducting, by a client device, a video call with a participant device by receiving video data through a video data channel established for the video call from the participant device;
rendering, within a digital video call interface, a first video captured by the client device within a first portion of a three-dimensional (3D) shared augmented reality (AR) space; and
displaying, within the digital video call interface, a second video from the participant device by rendering video data received through the video data channel, the second video portraying a second portion of the 3D shared AR space.

2. The computer-implemented method of claim 1, further comprising receiving AR data corresponding to the 3D shared AR space through an AR data channel from the participant device to render the first video within the first portion of the 3D shared AR space.

3. The computer-implemented method of claim 1 or claim 2, wherein rendering the first video within the first portion of the 3D shared AR space comprises:
generating an AR background texture for the 3D shared AR space; and
replacing a background of the first video with a portion of the AR background texture corresponding to the first portion of the 3D shared AR space.

4. The computer-implemented method of any preceding claim, further comprising:
segmenting a user depicted within the first video from a background of the first video to generate a segmented user portion; and
inserting the segmented user portion of the first video into the first portion of the 3D shared AR space.

5. The computer-implemented method of any preceding claim, further comprising transmitting, through an AR data channel, AR data corresponding to the 3D shared AR space to the participant device to cause the participant device to render the second video within the second portion of the 3D shared AR space.

6. The computer-implemented method of any preceding claim, further comprising:
detecting, by the client device, user movement during the video call; and
rendering, within the digital video call interface, the first video captured by the client device within a third portion of the 3D shared AR space based on the detected user movement.

7. The computer-implemented method of claim 6, wherein the user movement comprises detected movement of a participant depicted within the first video or client device movement of the client device.

8. The computer-implemented method of any preceding claim, further comprising:
receiving, by the client device, a user interaction with the 3D shared AR space;
modifying the 3D shared AR space corresponding to the first video based on the user interaction by adding an AR element to the 3D shared AR space or modifying an existing AR element within the 3D shared AR space; and
transmitting, through an AR data channel, AR data corresponding to the user interaction to the participant device to cause the participant device to modify the 3D shared AR space corresponding to the second video.

9. The computer-implemented method of claim 8, wherein a modification to the 3D shared AR space corresponding to the first video and corresponding to the second video is positioned at a matching portion of the 3D shared AR space.

10. The computer-implemented method of claim 8 or claim 9, further comprising saving a modification to the 3D shared AR space for subsequent video calls between the client device and the participant device.

11. The method of any preceding claim, wherein the first portion and the second portion of the 3D shared AR space comprise different views of a synchronized AR environment.

12. The method of any preceding claim, further comprising instructions that, when executed by the at least one processor, cause the at least one processor to:
receive, by the client device, a selection of an additional 3D shared AR space;
render, within the digital video call interface, the first video captured by the client device within a first portion of the additional 3D shared AR space; and
transmit, through an AR data channel, AR data corresponding to the additional 3D shared AR space to the participant device to cause the participant device to render the second video within a second portion of the additional 3D shared AR space.

13. A non-transitory computer-readable medium storing instructions that, when executed by at least one processor, cause the at least one processor to carry out the steps of any of claims 1 to 12.

14. A system comprising:
at least one processor; and
at least one non-transitory computer-readable medium comprising instructions that, when executed by the at least one processor, cause the system to carry out the steps of any of claims 1 to 12.
